(19) Europäisches Patentamt
European Patent Office
Office européen des brevets

(11) EP 4 369 064 A1

(12) # EUROPEAN PATENT APPLICATION
published in accordance with Art. 153(4) EPC

(43) Date of publication:
**15.05.2024 Bulletin 2024/20**

(21) Application number: **22837480.7**

(22) Date of filing: **22.06.2022**

(51) International Patent Classification (IPC):
***G02B 5/30*** *(2006.01)* ***B32B 7/023*** *(2019.01)*
***B42D 25/391*** *(2014.01)* ***G02B 5/22*** *(2006.01)*

(52) Cooperative Patent Classification (CPC):
**B32B 7/023; B42D 25/391; G02B 5/22; G02B 5/30**

(86) International application number:
**PCT/JP2022/024956**

(87) International publication number:
**WO 2023/282063 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.07.2021 JP 2021113021**

(71) Applicant: **Zeon Corporation**
**Tokyo 100-8246 (JP)**

(72) Inventors:
- **DUAN, Hailing**
  **Tokyo 100-8246 (JP)**
- **FUJINO, Yasuhide**
  **Tokyo 100-8246 (JP)**

(74) Representative: **Maiwald GmbH**
**Elisenhof**
**Elisenstraße 3**
**80335 München (DE)**

(54) **OPTICAL DISPLAY MEDIUM**

(57) An optical display medium having a display surface, the optical display medium including: a reflective polarizer layer provided in a reflection region $R_L$ that is a part of or an entirety of a region of the display surface; and a birefringent layer that is provided closer to a visual recognition side than the reflective polarizer layer and provided in a region $R_A$ that occupies a part of the reflection region $R_L$, wherein: the reflective polarizer layer is a layer that reflects incident light as circularly polarized light or linearly polarized light; and the birefringent layer is a layer containing a flake-shaped birefringent material, and is a layer exhibiting optical properties as a C-plate. The reflective polarizer layer is preferably a layer made of a material having cholesteric regularity.

FIG.1

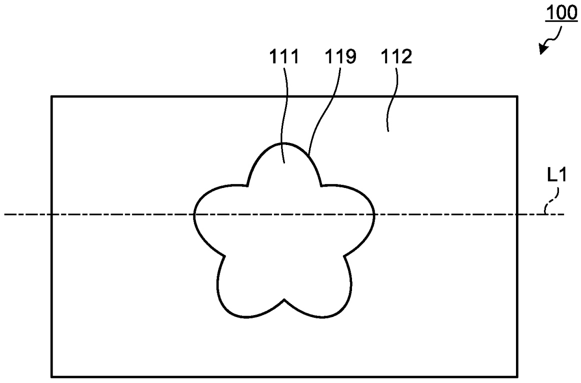




Processed by Luminess, 75001 PARIS (FR)

## Description

### Field

The present invention relates to an optical display medium usable as an identification medium and a decorative medium or for the applications of both the identification medium and the decorative medium, an article, and a method for using the optical display medium. Background

It is a general practice to dispose an identification medium on an article for facilitating determination whether the article is an authentic product or not. The identification medium is required to have an anti-counterfeiting property and an identification function. The anti-counterfeiting property of an identification medium herein refers to a property by which the identification medium cannot be easily reproduced by ordinary techniques such as printing. The identification function of an identification medium is a function by which an authentic identification medium can be distinguished with a high degree of reliability by certain means from a counterfeited identification medium that is counterfeited by ordinary techniques.

The identification medium has a special configuration that produces optical effects that are not often found in general members. In particular, the identification medium may have an optical property whereby a special shift of display state with the change of mode of observation can be observed, the shift being not obtainable with display media that are produced by ordinary production techniques. This optical property is also useful as a property for, other than its function as an identification medium, being aesthetically pleasing and producing decorative effects. Therefore, an optical display medium similar in configuration to the identification medium may be used as both an identification medium and a decorative medium. Alternatively, the optical display medium similar in configuration to the identification medium may be used only as a decorative medium without being used for application as an the identification medium.

It is desirable that the identification medium is configured such that an area exhibiting the identification function is concealed. In other words, it is desirable that the existence of the area exhibiting the identification function is not perceived by an ordinary observation. Specifically, when the existence of the area exhibiting the identification function is not perceived by an ordinary observation, counterfeiters do not recognize the identification medium as an identification medium, but simply recognize the identification medium as an ordinary display medium. In that case, the counterfeiters do not even come up with the idea of imitating the identification function of the identification medium. Therefore, in the case of the identification medium configured such that an area exhibiting the identification function is concealed, it is less likely that a counterfeited article imitating the identification function is produced.

For most identification media, their authenticity is determined by observation through special viewers that include an optical member, such as a circular polarizer or a linear polarizer (for example, Patent Literatures 1 to 3). There are also identification media which allow determination of the authenticity by observation with the naked eye without the necessity of the special viewers. For example, there are identification media which allow determination of the authenticity based on whether or not a stereoscopic image of a pattern on the identification media, such as so-called a hologram, can be viewed (for example, Patent Literature 4).

### Citation List

### Patent Literature

Patent Literature 1: Japanese Patent Application Laid-Open No. 2010-221650 A
Patent Literature 2: Japanese Patent Application Laid-Open No. 2010-113249 A (Corresponding Publication: US Patent Application Publication No. 2010/119738)
Patent Literature 3: International Publication No. 2005/059597
Patent Literature 4: Japanese Patent No. 5915838 B

### Summary

### Technical Problem

With the identification media that require a special tool for authenticity determination, the ability to perform authenticity determination is restricted to an exclusive group of people. In other words, only special identifying persons, such as customs officers, who possess special determination tools can make the determination, whereas general article users, who buy, sell, possess, or use articles, are unable to perform the determination since they do not possess such special determination tools.

In Patent Literatures 1 and 2, determination of the authenticity regarding the identification media requires special operation of bringing a determination tool close to the identification media. Therefore, in the case of these identification media, it is difficult to determine the authenticity of articles in the state where the articles are normally used (such as in the state where the articles are displayed as products, or the state where users other than the identifying persons possess the articles in the mode of normal use) without the necessity of special operation. For example, it is not possible to determine the authenticity of an article in the state of normal use by simple observation, such as brief observation from a distant position.

In the case of identification media that allow the determination by a so-called hologram without a special determination tool, there are less restrictions on who can make an authenticity determination. However, the anti-counterfeiting property may be insufficient in some cases because the already conventional hologram technology can be used to produce products that can provide relatively similar effects. In the case where the hologram is observed through a special determination tool, the identification media may have a configuration with an enhanced anti-counterfeiting property. However, in that case, there are restrictions on who can make the authenticity determination, as in the case described before.

In the case of the media having a hologram, the fact itself that the hologram exits there is perceived by normal observation, such as simply viewing the hologram under natural light, and this nature makes it difficult to conceal the area with the identification function.

Accordingly, an object of the present invention is to provide an optical display medium that has a high anti-counterfeiting property, has high concealability with respect to an area with an identification function, and at the same time allows the use of the identification function by simple observation without the use of a special determination tool.

Solution To Problem

Through studies on solutions to the aforementioned problems, the inventors of the present invention conceived an idea of configuring an identification medium whose identification function is available with the use of ordinary equipment, such as devices that emit polarized light, namely, polarized sunglasses and liquid crystal displays in the ordinary mode of use. As a result of performing further studies based on this idea, the inventors have found out that when a specific identification medium is configured and such ordinary equipment is used in a simple observation mode that without special operation, the identification function can be used with a good anti-counterfeiting property, and the concealability of an area with the identification function can be enhanced. In addition, thereby the degree of design freedom of the medium can also be enhanced. Thus, the inventors have completed the present invention.

Specifically, the present invention includes the following.

(1) An optical display medium having a display surface, the optical display medium comprising:

a reflective polarizer layer provided in a reflection region $R_L$ that is a part of or an entirety of a region of the display surface; and

a birefringent layer that is provided closer to a visual recognition side than the reflective polarizer layer and provided in a region $R_A$ that occupies a part of the reflection region $R_L$, wherein:

the reflective polarizer layer is a layer that reflects incident light as circularly polarized light or linearly polarized light; and

the birefringent layer is a layer containing a flake-shaped birefringent material, and is a layer exhibiting optical properties as a C-plate.

(2) The optical display medium according to (1), wherein the reflective polarizer layer is a layer made of a material having cholesteric regularity.

(3) The optical display medium according to (1) or (2), wherein the reflective polarizer layer is an ink layer containing a flake-shaped reflective material.

(4) The optical display medium according to any one of (1) to (3), wherein a color difference $\Delta E^*(N)$ in observation of the optical display medium with unpolarized light between the region $R_A$ and a region $R_B$ other than the region $R_A$ in the reflection region $R_L$ is 1 or less in observation in a polar angle direction of 0°.

(5) The optical display medium according to (4), wherein the color difference $\Delta E^*(N)$ is 1 or less in all observations in all directions in a polar angle direction of 20° to 70° and in an azimuth angle direction of 0° to 360°.

(6) The optical display medium according to any one of (1) to (5), wherein a color difference $\Delta E^*(P)$ in observation of the optical display medium with polarized light between the region $R_A$ and a region $R_B$ other than the region $R_A$ in the reflection region $R_L$ is 3 or more in any one of observations in all directions in a polar angle direction of 20° to 70° and in an azimuth angle direction of 0° to 360°.

(7) The optical display medium according to (6), wherein the color difference $\Delta E^*(P)$ is 1 or less in observation in a polar angle direction of 0°.

(8) The optical display medium according to any one of (1) to (7), wherein:

an in-plane phase difference $Re(A)_0$ of the birefringent layer measured from a polar angle direction of 0° satisfies $Re(A)_0 \leq 30$ nm; and
an oblique phase difference $Re(A)_{45}$ of the birefringent layer measured at any azimuth angle at a polar angle of 45° satisfies the following expression (e1):

$$70\ \text{nm} \leq Re(A)_{45} \leq 700\ \text{nm} \qquad \text{Expression (e1).}$$

(9) The optical display medium according to any one of (1) to (8), further comprising an isotropic layer that is provided closer to a visual recognition side than the reflective polarizer layer and that occupies a part of or entirety of a region $R_B$ other than the region $R_A$ in the reflection region $R_L$, and wherein

an in-plane phase difference $Re(B)_0$ of the isotropic layer measured from a polar angle direction of 0° satisfies $Re(B)_0 \leq 30$ nm; and
an oblique phase difference $Re(B)_{45}$ of the isotropic layer satisfies $0 \leq Re(B)_{45} \leq 30$.

## Advantageous Effects of Invention

According to the present invention, provided is an optical display medium that has a high anti-counterfeiting property and has high concealability of an area with an identification function, although the identification function can be used by simple observation without the use of a special determination tool.

## Brief Description of Drawings

FIG. 1 is a top view schematically illustrating an example of an optical display medium of the present invention.
FIG. 2 is a vertical sectional view of the optical displaying medium illustrated in FIG. 1 taken along a plane along line L1.

## Description of Embodiments

Hereinafter, the present invention will be described in detail with reference to embodiments and examples. However, the present invention is not limited to embodiments and examples described below, and may be freely modified for implementation without departing from the scope of claims of the present invention and the scope of their equivalents.

In the following description, "(meth)acryl group" is the term encompassing "an acryl group", "a methacryl group", and combinations thereof, unless otherwise specified. The expressions "(thio)epoxy group" and "iso(thio)cyanate group" have the same style of expression as above.

In the following description, an in-plane phase difference Re of a layer is a value represented by $Re = (nx - ny) \times d$ unless otherwise specified. In addition, a thickness-direction retardation Rth of a layer is a value represented by $Rth = \{(nx + ny)/2 - nz\} \times d$ unless otherwise specified. An NZ factor is a value represented by $(nx - nz)/(nx - ny)$ unless otherwise specified. Herein, nx, ny and nz are main refractive indices of a layer, and nx represents a refractive index in a direction in which the maximum refractive index is given among directions perpendicular to the thickness direction of the layer (in-plane directions), ny represents a refractive index in a direction, among the above-mentioned in-plane directions, perpendicular to the direction giving nx, nz represents a refractive index in the thickness direction, and d represents the thickness of the layer. The measurement wavelength is 550 nm unless otherwise specified. These values may be measured with a phase difference meter ("AxoScan" manufactured by Axometrics, Inc.).

In the present application, the phase difference in oblique directions is also discussed. The in-plane phase difference Re is usually measured by performing optical observation of a film in a polar angle direction of 0°, whereas the phase difference in oblique directions corresponds to an apparent in-plane phase difference value when the film is observed by changing the observation direction to an inclined polar angle direction of more than 0° and the plane orthogonal to the observation direction is regarded as the surface of the film. In the present application, the phase difference in oblique directions observed at a certain polar angle may be expressed with a value of the polar angle. For example, the phase difference in the oblique direction observed in the polar angle direction of 45° may be expressed as, for example, an oblique 45° phase difference or $Re_{45}$. In contrast, an in-plane phase difference observed at the polar

angle of 0° may be expressed as, for example, Reo for the sake of clarification thereof.

Specifically, an oblique phase difference Reφ at a polar angle φ is obtained by the expression: Reφ = |ny - nx'|·dφ.

Here, dφ is an optical path length inside a layer in the oblique direction and is obtained by the expression: dφ = d/cosφ.

In the expression, nx' is obtained by the following expression (e2).

Expression 1

$$n_x' = \frac{n_x \cdot n_z}{\sqrt{n_x^2 \sin^2 \phi + n_z^2 \cos^2 \phi}} \quad (e2)$$

In the following description, the direction of a slow axis of a certain layer refers to the direction of the slow axis in an in-plane direction unless otherwise specified. However, in the case of describing the phase difference in the oblique direction, the definition is as described before.

In the following description, unless otherwise specified, the optical display medium is described in the state where the optical display medium is mounted horizontally with the display surface facing upward. Therefore, the side from which the optical display medium is visually recognized may simply be referred to as an "upper" side, and the side opposite to the upper side may be referred to as a "lower" side. For example, among one surface and the other surface of a certain layer, the surface closer to the display surface of the optical display medium may be expressed as the "upper-side" surface. A direction perpendicular to the "upper" and "lower" directions may be referred to as a "horizontal" direction.

In the following description, a color difference expressed by a symbol ΔE* is a color difference ($\Delta E^*_{ab}$) in a color space CIE 1976 (L*, a*, b*), and is calculated with a light source D65 as a white point.

The optical display medium of the present invention may be observed in following observation modes:

- unpolarized light is made incident on the optical display medium, and reflected light from the optical display medium is observed in a normal mode (a mode without particular selection of a polarized component);
- unpolarized light is made incident on the optical display medium, and a polarized component in the reflected light from the optical display medium is selectively observed; and
- polarized light is made incident on the optical display medium, and reflected light from the optical display medium is observed in a normal mode.

For convenience of description in the following description, the first mode among the aforementioned three may be referred to as "observation with unpolarized light", the second mode may be referred to as "unpolarized light/polarized light observation", and the third mode may be referred to as "polarized light/unpolarized light observation". As a collective term for the second mode and the third mode, these are sometimes referred to as "observation with polarized light".

Outline of optical display medium:

The optical display medium of the present invention has a display surface, and includes a reflective polarizer layer that is provided in a reflection region $R_L$ that is a part of or an entirety of a region of the display surface, and a birefringent layer that is provided closer to a visual recognition side than the reflective polarizer layer and provided in a region $R_A$ that occupies a part of the reflection region $R_L$.

FIG. 1 is a top view schematically illustrating an example of the optical display medium of the present invention, and FIG. 2 is a vertical sectional view of the optical display medium illustrated in FIG. 1 taken along a plane along line L1. In FIGS. 1 and 2, an optical display medium 100 includes a substrate 101, a reflective polarizer layer 102 provided in contact with an upper-side surface 101U of the substrate 101, and a birefringent layer 111 provided in contact with an upper-side surface 102U of the reflective polarizer layer 102.

In this example, the entire upper surface of the optical display medium 100 is the region occupied by the reflective polarizer layer 102, and therefore the region serves as a reflection region $R_L$. The birefringent layer 111 occupies only the region $R_A$ that is a part of the reflection region $R_L$.

The optical display medium 100 further includes an isotropic layer 112 as an optional component. The isotropic layer 112 occupies the region $R_B$ that is a region other than the region $R_A$ in the reflection region $R_L$. In this example, the birefringent layer 111 and the isotropic layer 112 are disposed so that their side surfaces are in contact with each other at a boundary 119. Thus, from the viewpoint of enhancing the concealability of the identification function, it is preferable to dispose the birefringent layer in such a manner that the side surface of the entire or partial edge of the

birefringent layer are in contact with the side surface of the edge of the isotropic layer. The birefringent layer may be separated from the isotropic layer. However, the distance between the birefringent layer and the isotropic layer when they are separated is preferably small from the viewpoint of enhancing the concealability of the identification function. The distance is usually 200 μm or less, preferably 100 μm or less, more preferably 50 μm or less, further more preferably 20 μm or less, and particularly preferably 10 μm or less.

When the region $R_A$ occupied by the birefringent layer 111 and the region $R_B$ other than the region $R_A$ are provided in the reflection region $R_L$, these regions form a latent image. The latent image is an image that is not observed in normal observation with unpolarized light, and is observed only in specific observation of the optical display medium. In the optical display medium in the example of FIGS. 1 to 2, a floral pattern defined by the region $R_A$ may function as a latent image in the specific observation.

Reflective polarizer layer:

The reflective polarizer layer is a layer that reflects incident light as circularly polarized light or linearly polarized light. The reflective polarizer layer transmits some or all of the polarized components in a certain wavelength of the incident light and reflects some or all of the other polarized components. As the reflective polarizer layer, either a reflective circular polarizer or a reflective linear polarizer may be used.

The reflective circular polarizer is an optical element that transmits one of a clockwise circularly polarized light component and a counterclockwise circularly polarized light component of the incident light of a certain wavelength, while reflecting the other of the clockwise circularly polarized light component and the counterclockwise circularly polarized light component. The reflective linear polarizer is an optical element that transmits one of a certain linear polarized light component of the incident light with a certain wavelength and a linear polarized light component that is perpendicular to the certain linear polarized light component, while reflecting the other of the certain linear polarized light component and the perpendicular linear polarized light component.

For facilitating use of the optical display medium as an identification medium, the reflective polarizer layer is preferably a reflective circular polarizer. For facilitating use of the optical display medium, it is preferable to utilize a linear polarizer or a linearly polarized light source. When the reflective polarizer layer is the reflective circular polarizer, it is expected that the optical display medium can exhibit an identification function that is less dependent on the orientation of a transmission axis of the linear polarizer, with the use of the optical display medium using such a linear polarizer or the like.

In the example of FIGS. 1 and 2, the reflective circular polarizer is adopted as the reflective polarizer layer 102. More specific illustration of materials that constitute the reflective circular polarizer will separately be described later.

Birefringent layer:

In the present application, the birefringent layer is a layer exhibiting optical properties as a C-plate.

The C-plate is a positive C-plate or a negative C-plate. The positive C-plate is an optical member having a plate shape in which the main refractive indices nx, ny and nz satisfy nx < nz and also satisfy nx = ny or a relation close to nx = ny. The negative C-plate is an optical member having a plate shape in which the main refractive indices nx, ny and nz satisfy ny > nz and also satisfy nx = ny or a relation close to nx = ny.

As the C-plate, the negative C-plate is preferable because a negative C-plate having high quality and high degree of design freedom can be easily produced using, as a material, a liquid crystal compound which can also be used as a material of a reflective circular polarizer. In particular, by constituting a layer that is made of a material having cholesteric regularity and that has a part or all of its reflection band outside the visible region, a layer capable of functioning as a negative C-plate can be easily obtained.

The value of nx - ny in the birefringent layer is preferably 0.010 or less, more preferably 0.005 or less, and ideally 0 (i.e., nx = ny). When the value of nx - ny is small, the in-plane phase difference Re also becomes small, and so the relation between nx and ny in the C-plate can be defined by the in-plane phase difference Re. Specifically, the in-plane phase difference $Re(A)_0$ of the birefringent layer in the present application is preferably 30 nm or less, more preferably 15 nm or less, and ideally 0 nm. The value of nz - nx when the birefringent layer is a positive C-plate and the value of ny - nz when the birefringent layer is a negative C-plate may be appropriately adjusted to fall within a range in which a desired oblique phase difference can be obtained. Specifically, each of these values is preferably 0.010 or more, more preferably 0.015 or more, while being preferably 0.30 or less, more preferably 0.25 or less.

Since the birefringent layer is a C-plate, the phase difference thereof in the oblique direction becomes larger than the in-plane phase difference of the front surface. Specifically, the oblique phase difference $Re(A)_{45}$ of the birefringent layer measured at any azimuth angle at a polar angle of 45° preferably satisfies the following expression (e1). In a more preferable example, the oblique phase difference $Re(A)_{45}$ of the birefringent layer, measured from all azimuth angles at a polar angle of 45°, falls within the following preferable range.

$$70\ nm \leq Re(A)_{45} \leq 700\ nm \qquad \text{Expression (e1)}$$

In this case, at least a part of $Re(A)_{20-70}$ (i.e., measured values of the in-plane phase difference Re(A) measured from all azimuth angles within a polar angle range of 20 to 70°) may become in a range of 107.5 nm or more and 167.5 nm or less. With the $Re(A)_{20-70}$ satisfying such requirements, the birefringent layer can function as a λ/4 waveplate at 550 nm, which is the center of the visible light wavelength range, when the birefringent layer is observed from any direction within the polar angle range of 20 to 70°.

In the expression (e1), the lower limit of $Re_{20}$-$_{70}$ is more preferably 120 nm or more, while being more preferably 155 nm or less. Since the birefringent layer is a C-plate and $Re(A)_0$ is such a smaller value of 30 nm or less, the $Re(A)_{20-70}$ usually satisfies the expression (e1) in all azimuth angles when the $Re(A)_{20-70}$ satisfies the expression (e1) at a certain azimuth angle.

From another point of view, the in-plane phase difference $Re(A)_{45}$ of the birefringent layer measured from any azimuth angle at a polar angle of 45° is preferably 70 nm or more, while being preferably 700 nm or less. With the $Re(A)_{45}$ falling within such a range, the birefringent layer can function as a λ/4 waveplate at 550 nm, which is the center of the visible light wavelength range, when the birefringent layer is observed from any direction in the polar angle range of 20 to 70°.

The birefringent layer is a layer containing a flake-shaped birefringent material. The flake-shaped birefringent material is a particle having a flake-shaped shape made of a film that can function as a C-plate. Such a particle having a flake-shaped shape may be obtained by preparing a film that can function as a C-plate and pulverizing it into flat shaped particles. A more specific example of the material constituting the C-plate will be described later.

Isotropic layer:

The optical display medium of the present invention may consist of only the birefringent layer and the reflective polarizer layer. Alternatively, in addition thereto, the optical display medium of the present invention may further include optional components. An example of the optional components is an isotropic layer. An isotropic layer is an optically isotropic layer, i.e., a layer with no or sufficiently low in-plane phase difference and phase difference in a thickness direction. Specifically, the in-plane phase difference $Re(B)_0$ of the isotropic layer measured from a direction polar angle of 0° is preferably 30 nm or less, more preferably 15 nm or less, and ideally 0 nm. The thickness-direction phase difference Rth(B) of the isotropic layer is preferably -30 nm or more, more preferably -15 nm or more, while being preferably 30 nm or less, more preferably 15 nm or less. The oblique 45° phase difference $Re(B)_{45}$ of the isotropic layer is preferably 30 nm or less, more preferably 15 nm or less, and ideally 0 nm.

The isotropic layer may be disposed in a region $R_B$ that is a region other than the region $R_A$ of the reflection region $R_L$. By disposing the isotropic layer in the region $R_B$, it is possible to reduce the difference between the appearance of the region $R_A$ and the appearance of the region $R_B$ in observation with unpolarized light, and thus it is possible to enhance the concealability of the identification function. It is particularly preferable for enhancing the concealability of the identification function to dispose the isotropic layer such that the side surface thereof is in contact with the side surface of the birefringent layer, such as the isotropic layer 112 in the example of FIGS. 1 to 2.

Other components:

Examples of other optional components may include a light absorbing layer, a substrate layer, a decorative member, and an attaching member.

The light absorbing layer is a layer that absorbs incident light. The light absorbing layer may be a black layer. The material of the light absorbing layer may be any material. For example, the material may be a black colored film. The light absorbing layer may be disposed on the back side of the reflective polarizer layer, i.e., at a position opposite to the viewing side of the reflective polarizer layer. When the reflective polarizer layer is either a reflective circular polarizer or a reflective linear polarizer, most of the incident light that is not reflected is transmitted therethrough. When the light absorbing layer is provided on the back side of the reflective polarizer layer, it absorbs the transmitted light, and as a result, the effect of the reflected light can be visually recognized more clearly. On the other hand, in the case where the light absorbing layer is not provided on the back side of the reflective polarizer layer, the back side of the reflective polarizer layer is visually recognized, and the effect caused by the reflected light becomes unclear, but a design effect where the optical display medium can be a see-through object may be obtained.

The substrate layer may be provided on the back side of the reflective polarizer layer, such as the substrate 101 in the example of FIGS. 1 to 2. The substrate layer may also serve as a light absorbing layer, but a substrate layer may be provided separately from the light absorbing layer.

The decorative member, which does not contribute to the expression of the identification function of the optical

display medium, may contribute to design effects of the optical display medium. An example of the decorative member may be pieces having metallic luster called lamé. Such pieces may be disposed side-by-side with pieces of the reflective polarizer layer, or may be disposed so as to overlap the upper surface of the reflective polarizer layer. Other examples of the decorative member may include a transparent member such as a cover glass that covers the display surface of the optical display medium, and a casing such as a tray for decorating or protecting the surrounding of the optical display medium.

An attaching member is a member that functions when an optical display medium is attached to an article. The attaching member may be a member a part or the entirety of which also serves as a decorative member. Examples of the attaching member may include a member that extends from the surrounding of the optical display medium, such as a ring, a clasp, a hook, a wire, a chain, and a string, and a casing such as a tray that also serves as decorative members. The attaching member may directly be attached to a reflective polarizer layer and/or a patterned phase difference layer, which are essential components of the optical display medium, or may be bonded through any other optional member. Bonding with the attaching member may be any one of adhesion by an adhesive agent, adhesion by welder processing, or mechanical bonding such as screw fastening or ligation.

Optical property of optical display medium:

It is preferable that the optical display medium has a small color difference ΔE*(N) between the region $R_A$ and the region $R_B$ in observation with unpolarized light. Specifically, the color difference ΔE*(N) in observation with unpolarized light is preferably 1 or less, more preferably 0.7 or less, and ideally 0, in observation in the polar angle direction of 0°. In addition, in all the observations in all directions in the polar angle direction of 20 to 70° and in the azimuth angle direction of 0 to 360°, ΔE*(N) is preferably 1 or less and preferably 0.7 or less. More preferably, in all the observations in all directions in the polar angle direction of 20 to 70° and in the azimuth angle direction of 0 to 360°, ΔE*(N) satisfies requirements of the aforementioned numerical ranges. Having such a small ΔE*(N) can enhance the concealability of the identification function of the optical display medium in normal observation with unpolarized light.

The color difference ΔE*(P) between the region $R_A$ and the region $R_B$ in observation with polarized light is preferably small when observation is performed in the polar angle direction of 0°, and is preferably large when observation is performed at a certain polar angle that is more than 0°. Specifically, the color difference ΔE*(P) is preferably 1 or less, more preferably 0.7 or less, and ideally 0, in the observation in the polar angle direction of 0°. In contrast, in one of the observations in all directions in the polar angle direction of 20 to 70° and in the azimuth angle direction of 0 to 360°, the color difference ΔE*(P) is preferably 3 or more, and more preferably 7 or more. In a more preferable example, in all the observations in all directions in the polar angle direction of 20 to 70° and in the azimuth angle direction of 0 to 360°, the color difference ΔE*(P) is preferably 3 or more, and more preferably 7 or more. The maximum value of the color difference ΔE*(P), in the observations in all directions in the polar angle direction of 20 to 70° and in the azimuth angle direction of 0° to 360°, is not particularly limited, and the maximum value may be 60 or less, or 40 or less, for example. Because the birefringent layer is a C-plate, and $Re(A)_0$ is a small value of 30 nm or less, the color difference ΔE*(P) is usually equal to or more than the lower limit at all the azimuth angles, when the color difference ΔE*(P) at one azimuth angle is equal to or more than the lower limit. The color difference ΔE*(P) may take the maximum value at a certain angle within the polar angle range of 20 to 70°. The polar angle that provides the maximum color difference ΔE*(P) is preferably 30 to 60°.

Since the color difference ΔE*(P) is small when observation is performed in the polar angle direction of 0° and is large when observation is performed at a certain polar angle that is more than 0°, the optical display medium can exhibit the identification function by being observed with polarized light, and the identification function can be used by simple observation. Specifically, an observer who wears polarized sunglasses can determine the authenticity of an optical display medium, which is attached to an article that is in the state of normal use, by a simple observation. The observation may be observation at varied angles for checking whether color change thereby occurs in the latent image, or for checking the brightness difference of the latent image and the surrounding area. As a result, it becomes possible to determine the authenticity of the optical display medium that are attached to articles in a state of normal used, such as the state of being displayed as a product or the state of being possessed for normal use by users who are other than the identifying person, by simple observation such as glancing at the articles without interfering with the state of use.

Method for using optical display medium as identification medium:

When the optical display medium of the present invention is used, incident light is made incident on the display surface and is made reflected on the reflective polarizer layer to produce reflected light, and the reflected light is observed. Specific examples of the observation may include:

- observation with unpolarized light (unpolarized light is made incident on the identification medium, and reflected

light from the identification medium is observed in a normal mode, that is, a mode without particular selection of a polarized component); and

- observation with polarized light.

Specific examples of the observation with polarized light may include:

- unpolarized light/polarized light observation (unpolarized light is made incident on the identification medium, and a polarized component in the reflected light from the identification medium is selectively observed); and
- polarized light/unpolarized light observation (polarized light is made incident on the identification medium, and reflected light from the identification medium is observed in a normal mode.

Examples of light that is made incident on the optical display medium may include unpolarized light and polarized light. Examples of the polarized light may include linearly polarized light, circularly polarized light, and elliptically polarized light. In observation of reflected light, when the light to be made incident is unpolarized light, the unpolarized light/polarized light observation may be performed by selectively observing linear polarized light component or a circularly polarized light component in the reflected light.

When the light to be made incident is unpolarized light, general ambient light, such as sunlight and indoor illumination light, may be used as the unpolarized light.

When the polarized light to be made incident is linearly polarized light, linearly polarized light obtained by allowing unpolarized light to pass through a linear polarizer may be used as the linearly polarized light. While a device for supplying the linearly polarized light may be a dedicated product for the use of the optical display medium of the present invention, it is also possible to use a combination of a general light source and a general linear polarizer, which are for use in other applications. Alternatively, a general device used for other applications, in which a light source and a linear polarizer are used in combination, may be used.

Wen the polarized light to be made incident is circularly polarized light, the circularly polarized light obtained by allowing unpolarized light to pass through a circular polarizer may be used as the circularly polarized light. While a device for supplying the circularly polarized light may be a dedicated product for the use of the optical display medium of the present invention, it is also possible to use a combination of a general light source and a general linear polarizer, which are for use in other applications. Alternatively, a general device used for other applications, in which a light source and a circular polarizer are used in combination, may be used.

When the polarized light to be made incident is elliptically polarized light, elliptically polarized light obtained by allowing unpolarized light to pass through an appropriate optical element may be used as the elliptically polarized light. While a device for supplying the elliptically polarized light may be a dedicated product for the use of the optical display medium of the present invention, it is also possible to use a combination of a general light source and a general linear polarizer or a circular polarizer, which are for use in other applications. Alternatively, a general device used for other applications, in which a light source and a linear polarizer or a circular polarizer are used in combination, may be used.

For example, most of electronic devices equipped with display screens, such as personal computers and smartphones with general liquid crystal display screens, emit linearly polarized light as emission light from the display screens. Accordingly, such an electronic device may be used as a device for supplying linearly polarized light. More specifically, by an operation such as bringing such an electronic device close to the optical display medium, the optical display medium can be placed under conditions where incidence of unpolarized ambient light is small and incidence of emitted light from the electronic device is relatively large, so that supply of the linearly polarized light can be achieved.

In another example, some electronic devices equipped with display screens, such as personal computers and smartphones with general liquid crystal display screens, emit circularly polarized light as emission light from the display screens. Accordingly, such an electronic device may be used as a device for supplying circularly polarized light. More specifically, by an operation such as bringing such an electronic device close to the optical display medium, the optical display medium can be placed under conditions where incidence of unpolarized ambient light is small and incidence of emitted light from the electronic device is relatively large, so that supply of the circularly polarized light can be achieved.

In still another example, onto the display screen of the aforementioned electronic device that emits the linearly polarized light or the circularly polarized light, an optional film may be laminated for various purposes. Examples of such optional films may include those laminated for various purposes, such as protecting the display screen, adjusting a viewing angle of the display screen, and improving the visibility when the display screen is observed through polarized sunglasses. Most of these films have some sort of phase difference, and therefore these films can exhibit the function of converting linearly polarized light to circularly polarized light or elliptically polarized light, or converting the circularly polarized light to linearly polarized light or elliptically polarized light. The supply of linearly polarized light, circularly polarized light, or other elliptically polarized light can also be achieved by using electronic devices that includes optional films in such modes.

Selective observation of the linearly polarized light component in the reflected light may be performed by visual

observation of the reflected light through a linear polarizer for observation. Selective observation of the circularly polarized light component in the reflected light may be performed by visual observation of the reflected light through a circular polarizer for observation. To avoid obstructing the incidence of ambient light, the linear polarizer for observation and the circular polarizer for observation may usually be used so as to be separated from the optical display medium. The lower limit of the separation distance may be adjusted appropriately depending on the size of the optical display medium and the linear polarizer for observation, and the lower limit may usually be 100 mm or more. Meanwhile, the upper limit of the separation distance may be adjusted appropriately within the range where the reflected light of the optical display medium can be observed, and the upper limit may usually be 30 m or less.

Thus, the linear polarizer for observation used in a position separated from the optical display medium may be a dedicated product for the use of the optical display medium of the present invention, and the linear polarizer may also be a general linear polarizer for use in other applications. For example, since most commercially available polarized sunglasses can function as linear polarizers, such commercially available polarized sunglasses may be used as the linear polarizer for observation. Examples of the circular polarizer for observation may include a circular polarizer constituted of a combination of a linear polarizer and a phase difference film, and a circular polarizer including a layer made of cholesteric materials (for example, those disclosed in International Publication No. 2020/121791).

Method for use and specific examples of expression of identification function:

The method for using the optical display medium of the present invention as an identification medium and an example of the expression of the identification function by this method will be described in more detail with taking as an example the optical display medium 100 illustrated in FIGS. 1 to 2, wherein the reflective polarizer layer is a silver-color reflective circular polarizer (that is, having a reflection band covering the entire visible light region), and the substrate 101 functions as a light absorbing layer.

First, the case of normal observation with unpolarized light will be described. In this case, a latent image is not observed both in the case wherein the observation direction is the polar angle direction of 0° and in the case wherein the observation direction is the polar angle direction of more than 0°.

Specifically, when unpolarized light is incident on the region $R_B$ from the upper-side surface of the optical display medium 100, the light passes through the isotropic layer 112 and reaches the reflective polarizer layer 102. Being a reflective circular polarizer, the reflective polarizer layer 102 separates the unpolarized light into clockwise circularly polarized light and counterclockwise circularly polarized light, reflects one of the clockwise and counterclockwise circularly polarized light and transmits the other. The substrate 101 absorbs the transmitted circularly polarized light. Meanwhile, the reflected circularly polarized light again passes through the isotropic layer 112 and exits upward.

Since the isotropic layer 112 is a layer with isotropy, the phase difference of the light passing through the isotropic layer 112 does not change before and after transmission, and the polarization state of the light does not change either, regardless of whether the observation direction is the polar angle direction of 0° or the polar angle direction of more than 0°.

When unpolarized light is incident on the region $R_A$ from the upper-side surface of the optical display medium 100, the light passes through the birefringent layer 111 and reaches the reflective polarizer layer 102. Being a reflective circular polarizer, the reflective polarizer layer 102 separates the unpolarized light into clockwise circularly polarized light and counterclockwise circularly polarized light, reflects one of the clockwise and counterclockwise circularly polarized light and transmit the other. The substrate 101 absorbs the transmitted circularly polarized light. Meanwhile, the reflected circularly polarized light again passes through the birefringent layer 111 and exits upward.

Herein, when the observation direction is the polar angle direction of 0°, an observer observes the light emitted after the circularly polarized light perpendicularly passes through the birefringent layer 111. Since the birefringent layer 111 is a C-plate, the phase difference of the light perpendicularly passing through the birefringent layer 111 does not change before and after transmission, and the polarization state of the light does not change either. Therefore, a latent image is not observed because no apparent difference between the region $R_A$ and region $R_B$ can be visually recognized.

When the observation direction is the polar angle direction of more than 0°, the observer observes the light emitted after the circularly polarized light obliquely passes through the birefringent layer 111. The birefringent layer 111 is a C-plate, which functions as a layer having an oblique phase difference for light that obliquely passes through. As a result, the emitted light becomes elliptically polarized light or linearly polarized light, and in particular the observer observes linearly polarized light at the polar angles where the birefringent layer 111 functions as a $\lambda/4$ waveplate. However, the difference in the polarized state is not visually recognized by visual observation. As a result, a latent image is not observed because no apparent difference between the region $R_A$ and region $R_B$ can be visually recognized.

Subsequently, the case of unpolarized light/polarized light observation using the linear polarizer as a polarizer for observation will be described. In this case, a latent image is not observed when the observation direction is the polar angle direction of 0°, and a latent image is observed in a certain observation angle range that is higher than 0°.

Specifically, when unpolarized light is incident on the region $R_B$ from the upper-side surface of the optical display medium 100, the light emitted from the optical display medium 100 is circularly polarized light as in the case of the observation with unpolarized light. When the circularly polarized light is observed through the linear polarizer for observation, the linearly polarized light component along the linear polarizer transmission axis, in the circularly polarized light, passes through the linear polarizer for observation and reaches the observer. As a result, the region $R_B$ is observed at a lower brightness than the case of observing with unpolarized light. Since the isotropic layer 112 is a layer with isotropy, the phase difference of the light passing through the isotropic layer 112 does not change before and after transmission, and the polarization state of the light does not change either, regardless of whether the observation direction is the polar angle direction of 0° or the polar angle direction of more than 0°. Accordingly, in the region $R_B$, any significant change in appearance due to the change in polar angle is not observed. Even when an angular relation between the transmission axis direction of the linear polarizer for observation and the optical display medium 100 changes, there is no significant change in appearance.

In the case where unpolarized light is incident on the region $R_A$ from the upper-side surface of the optical display medium 100, the light emitted from the optical display medium 100 becomes circularly polarized light when the observation direction is the polar angle direction of 0°, the emitted light becomes elliptically polarized light or linearly polarized light when the observation direction is the polar angle direction of more than 0°, and in particular the emitted light becomes linearly polarized light at the polar angles where the birefringent layer 111 functions as a $\lambda/4$ waveplate, as in the case of observing with unpolarized light. When the circularly polarized light emitted from the region $R_A$ at the polar angle of 0° is observed through the linear polarizer for observation, the linearly polarized light component along the linear polarizer transmission axis, in the circularly polarized light, passes through the linear polarizer for observation and reaches the observer. As a result, the region $R_A$ is observed at a lower brightness than the case of observing with unpolarized light. In this case, even when an angular relation between the transmission axis direction of the linear polarizer for observation and the optical display medium 100 changes, there is no significant change in appearance. Contrary to this, when the polar angle is more than 0°, the linearly polarized light component along the linear polarizer transmission axis, in the elliptically polarized light or the linearly polarized light to be emitted, passes through the linear polarizer for observation and reaches the observer. As a result, the appearance of the region $R_A$ changes significantly due to the change in the angular relation between the transmission axis direction of the linear polarizer for observation and the optical display medium 100. In particular, when observation is performed at the polar angles where the refractive layer 111 functions as a $\lambda/4$ waveplate, and the transmission axis of the linear polarizer for observation and an apparent slow axis of the refractive layer have an angular relation of 45° or 135° as viewed in the observation direction, the brightness of the region $R_A$ becomes maximum or minimum. With such change in appearance, a boundary between the refractive layer 111 and the isotropic layer 112 is visually recognized clearly, and a latent image is observed.

Furthermore, the case of polarized light/unpolarized light observation using the linearly polarized light as incident light will be described. Also in this case, a latent image is not observed when the observation direction is the polar angle direction of 0°, and a latent image is observed in a certain observation angle range where the polar angle is more than 0°.

Specifically, in the case where linearly polarized light is incident on the region $R_B$ from the upper-side surface of the optical display medium 100, the light reflected by the reflective polarizer layer 102 and emitted from the optical display medium 100 becomes circularly polarized light constituted of only the clockwise circularly polarized light component or the counterclockwise circularly polarized light component in the incident linearly polarized light. Since the isotropic layer 112 is a layer with isotropy, the phase difference of the light passing through the isotropic layer 112 does not change before and after transmission, and the polarization state of the light does not change either, regardless of whether the observation direction is the polar angle direction of 0° or the polar angle direction of more than 0°.

Meanwhile, when linearly polarized light is incident on the region $R_A$ from the upper-side surface of the optical display medium 100 and the observation direction is the polar angle direction of 0°, the light that is incident at the polar angle of 0° is reflected by the reflective polarizer layer 102, and is then emitted is observed. Since the birefringent layer 111 is a C-plate, the phase difference of the light perpendicularly passing through the birefringent layer 111 does not change before and after transmission, and the polarization state of the light does not change either. Therefore, a latent image is not observed because no apparent difference between the region $R_A$ and region $R_B$ can be visually recognized.

When the observation direction is the polar angle direction of more than 0°, the light that is incident at the polar angle of more than 0°, reflected by the reflective polarizer layer 102, and then emitted is observed. In this case, the linearly polarized light incident at the polar angle of more than 0° obliquely passes through the birefringent layer 111 where the light is converted into elliptically polarized light or circularly polarized light, and reaches the reflective polarizer layer 102. In the reflective polarizer layer 102, only the clockwise circularly polarized light component or the counterclockwise circularly polarized light component is further reflected. The amount of the circularly polarized light component of the reflected light changes depending on the polarization state of the light that reaches the reflective polarizer layer 102, and the polarization state changes depending on the relation between a polarizing direction of the linearly polarized incident light and an apparent slow axis of the birefringent layer 111. With such change in appearance, a boundary between the refractive layer 111 and the isotropic layer 112 is visually recognized clearly, and a latent image is observed.

As a result of the foregoing, a latent image is not observed in the observation with unpolarized light and the observation with polarized light at the polar angle of 0° (i.e., the unpolarized light/polarized light observation and/or the polarized light/unpolarized light observation), whereas in the observation with polarized light at the polar angle of more

than 0°, a latent image is observed. When such a difference between the observation with unpolarized light and the observation with polarized light and a difference due to the polar angle in the observation with polarized light are visually recognized, the optical display medium can be determined to be authentic. In addition, the clarity of a latent image when the latent image is visually recognized changes due to the polar angle of the observation direction, and also changes with a change of a positional relation between the polarization direction of the polarized incident light or the transmission axis direction of the linear polarizer for observation and the optical display medium. When such changes are visually recognized, the optical display medium can be determined to be authentic.

In the examples described in the foregoing, the reflective circular polarizer is used as the reflective polarizer layer, and linearly polarized light is used for observation with polarized light (that is, a linearly polarized light source or a linear polarizer for observation is used), although the optical display medium of the present invention and the method for use thereof are not limited thereto. In any of the case where the reflective circular polarizer is used as the reflective polarizer layer, and circularly polarized light is used for observation with polarized light, the case where the reflective linear polarizer is used as the reflective polarizer layer and linearly polarized light is used for observation with polarized light, and the case where the reflective linear polarizer is used as the reflective polarizer layer and circularly polarized light is used for observation with polarized light, a latent image is observed based on the fact that the polarizer layer is a C-plate, when the polar angle is more than 0° in the observation with polarized light. Therefore, with these configuration, use of the optical display medium with the same method as described above may be performed.

Specific example of reflective polarizer layer:

The material that constitutes the reflective polarizer layer and the method of forming the reflective polarizer layer will be specifically described. Examples of the reflective polarizer layer may include a reflective circular polarizer, exemplified as the reflective polarizer layer 102 described above, and a reflective linear polarizer. The reflective polarizer layer may be the one expressing such a function by only a single layer, or may be the one expressing such a function by a combination of a plurality of layers.

The reflective polarizer layer is preferably an ink layer containing a flake-shaped reflective material. An ink layer is a layer of a cured product of an ink and is usually formed by application and curing of the ink. The ink usually includes a solvent and a solid component(s), and a part or all of the solvent volatilizes upon curing thereof. The ink layer is thus a layer containing the solid component(s) of the ink. Accordingly, the ink for forming the reflective polarizer layer may include a flake-shaped reflective material as a solid component.

The flake-shaped reflective material is a flake, that is, a particle having a flake-shaped shape, and each particle has a function as a reflective polarizer. More specifically, a film that can function as a reflective polarizer layer as a raw material for flakes is prepared. Such a raw material film is pulverized to form flakes, which can be used as a flake-shaped reflective material.

The average particle diameter of the flakes is not particularly limited, and may be a particle diameter suitable for forming an ink layer. Specifically, the average particle diameter is preferably 10 $\mu$m or more, more preferably 20 $\mu$m or more, while being preferably 300 $\mu$m or less, more preferably 100 $\mu$m or less. The average particle diameter may be a D50 average particle diameter which can be determined by measuring a particle size distribution with a laser diffraction/scattering particle size distribution measuring device (for example, product name "LA-960" manufactured by Horiba, Ltd.).

A ratio lid of the average particle diameter 1 of the flakes relative to the thickness d of the flakes is preferably 2 or more, more preferably 4 or more, while being preferably 100 or less, more preferably 50 or less. With such a shape, the thickness direction of the film of the raw material of the flakes and the thickness direction of the ink layer containing the flakes prepared using the film are in the same direction, and therefore, it is possible to easily form an ink layer of which the optical properties are the same as those of the raw material film of the flakes.

Components other than the flakes in the ink are not particularly limited, and substances such as medium and diluents for commercially available inks may be used.

When an ink layer is formed using an ink containing a flake-shaped reflective material on the surface of a substrate, it is particularly preferable in that the degree of freedom in production is high as compared with a case where the same material as the raw material film is directly formed on the surface of the substrate so as to form a reflective polarizer layer. As a result, various advantages can be obtained. For example, it is possible to easily form the reflective polarizer layer on the surface of the substrate without orientation regulating force, it is possible to together perform treatments such as an orientation treatment and a band-broadening treatment at the time of preparation of the raw material film, and thereby these treatments do not have to be performed in the production of the respective optical display elements. In addition, it is possible to easily adjust the shape such as the planar shape and thickness of the reflective polarizer layer on the display surface of the optical display medium.

Examples of the film that can be used as a reflective circular polarizer layer (including the raw material film of the flake-shaped reflective material) may include a layer made of a material having cholesteric regularity. The cholesteric

regularity is a structure in which the angle of molecular axes in stacking planes in the material are shifted (twisted) as the planes are observed sequentially passing through the stacked planes, such that molecular axes in a certain first plane are oriented in a certain direction, molecular axes in a subsequent plane stacking on the first plane are oriented in a direction shifted by a small angle with respected to that of the first plane, and molecular axes in still another plane are oriented in a direction of a further shifted angle. That is, when molecules inside a layer of a certain material have cholesteric regularity, molecular axes of the molecules on a first plane inside the layer are aligned along a uniform direction. On the subsequent second plane stacking on the first plane inside the layer, a direction of molecular axes is shifted by a slight angle from the direction of the molecular axes on the first plane. On the subsequent third plane further stacking on the second plane, a direction of molecular axes is further shifted by an angle from the direction of the molecular axes on the second plane. In this manner, on the planes disposed in a stacking manner, the angles of the molecular axes on these planes are sequentially shifted (twisted). The structure in which the directions of the molecular axes are twisted in this manner is usually a herical structure and is an optically chiral structure.

More specific examples of the material having cholesteric regularity may include a cholesteric resin layer. The cholesteric resin layer is a layer obtained by curing a curable liquid crystal compound that exhibits a cholesteric liquid crystal phase. The cholesteric resin layer may be obtained, for example, by polymerizing a polymerizable liquid crystal compound while keeping the state of exhibiting a cholesteric liquid crystal phase. More specifically, a liquid crystal composition containing a polymerizable liquid crystal compound is applied onto an appropriate substrate or the like to form a layer, and is oriented in a cholesteric liquid crystal phase and cured, whereby a cholesteric resin layer can be obtained.

The polymerizable liquid crystal compound is preferably a photopolymerizable liquid crystal compound. As the photopolymerizable liquid crystal compound, a photopolymerizable liquid crystal compound which can be polymerized by irradiation with an active energy ray may be used. As the active energy ray, an energy ray capable of causing the polymerization reaction of the photopolymerizable liquid crystal compound to proceed may be adopted from a wide range of energy rays such as visible light, ultraviolet rays, and infrared rays, and ionizing radiation such as ultraviolet rays is particularly preferable. Among these, as the photopolymerizable liquid crystal compound suitably used in the cholesteric liquid crystal composition, a rod-shaped liquid crystal compound having two or more reactive groups in one molecule is preferable, and a compound represented by the formula (1) is particularly preferable:

$$R^3\text{-}C^3\text{-}D^3\text{-}C^5\text{-}M\text{-}C^6\text{-}D^4\text{-}C^4\text{-}R^4 \qquad \text{Formula (1)}.$$

In the formula (1), $R^3$ and $R^4$ are reactive groups and each independently represent a group selected from the group consisting of a (meth)acrylic group, a (thio)epoxy group, an oxetane group, a thietanyl group, an aziridinyl group, a pyrrole group, a vinyl group, an allyl group, a fumarate group, a cinnamoyl group, an oxazoline group, a mercapto group, an iso(thio)cyanate group, an amino group, a hydroxyl group, a carbonyl group, and an alkoxysilyl group. By having these reactive groups, a liquid crystal composition cured layer having high mechanical strength can be obtained when the liquid crystal composition is cured.

In the formula (1), $D^3$ and $D^4$ each independently represent a group selected from the group consisting of a single bond, a linear or branched alkyl group of 1 to 20 carbon atoms, and a linear or branched alkylene oxide group of 1 to 20 carbon atoms.

In the formula (1), $C^3$ to $C^6$ each independently represent a group selected from the group consisting of a single bond, -O-, -S-, -S-S-, -CO-, -CS-, -OCO-, $-CH_2-$,$-OCH_2-$, -CH=N-N=CH-, -NHCO-, -O-(C=O)-O-, $-CH_2-(C=O)-O-$, and $-CH_2O-(C=O)-$.

In the formula (1), M represents a mesogen group. Specifically, M represents a group obtained by bonding two to four same or different skeletons selected from the group consisting of azomethines, azoxies, phenyls, biphenyls, terphenyls, naphthalenes, anthracenes, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolanes, and alkenylcyclohexylbenzonitriles, which may or may not be substituted, by a bonding group such as -O-, -S-, -S-S-, -CO-, -CS-, -OCO-, $-CH_2-$, $-OCH_2-$, -CH=N-N=CH-, -NHCO-, -O-(C=O)-O-, $-CH_2-(C=O)-O-$, or $-CH_2O-(C=O)-$.

Examples of the substituent that the mesogen group M may have may include a halogen atom, an alkyl group of 1 to 10 carbon atoms optionally having a substituent, a cyano group, a nitro group, $-O-R^5$, $-O-C(=O)-R^5$, $-C(=O)-O-R^5$, $-O-C(=O)-O-R^5$, $-NR^5-C(=O)-R^5$, $-C(=O)-NR^5R$, and $-O-C(=O)-NR^5R^7$. Herein, $R^5$ and $R^7$ represent a hydrogen atom or an alkyl group of 1 to 10 carbon atoms. When $R^5$ and $R^7$ are an alkyl group, the alkyl group may be bonded via -O-, -S-,-O-C (=O)-, -C(=O)-O-, -O-C(=O)-O-, $-NR^6-C(=O)-$, $-C(=O)-NR^6-$, $-NR^6-$, or -C(=O)- (with a proviso that cases where two or more adjacent -O-'s or -S-'s are present as an intervening group are excluded). Herein, $R^6$ represents a hydrogen atom or an alkyl group of 1 to 6 carbon atoms.

Examples of the substituents in the above-mentioned "alkyl group of 1 to 10 carbon atoms optionally having a substituent" may include a halogen atom, a hydroxyl group, a carboxyl group, a cyano group, an amino group, an alkoxy group of 1 to 6 carbon atoms, an alkoxyalkoxy group of 2 to 8 carbon atoms, an alkoxyalkoxyalkoxy group of 3 to 15

carbon atoms, an alkoxycarbonyl group of 2 to 7 carbon atoms, an alkylcarbonyloxy group of 2 to 7 carbon atoms, and an alkoxycarbonyloxy group of 2 to 7 carbon atoms.

It is preferable that the rod-shaped liquid crystal compound has an asymmetric structure. Herein, the asymmetric structure refers to a structure in which $R^3$-$C^3$-$D^3$-$C^5$-M- and -M-$C^6$-$D^4$-$C^4$-$R^4$ differ from each other in the formula (1) with the mesogen group M serving as its center. By using the compound with an asymmetric structure as the rod-shaped liquid crystal compound, it is possible to further enhance orientation uniformity.

Preferable specific examples of the rod-shaped liquid crystal compound may include the following compounds (B1) to (B10). However, the rod-shaped liquid crystal compound is not limited to the following compounds.

Chemical formula 1

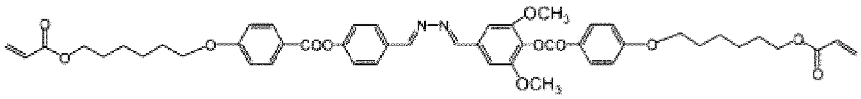
(B1)

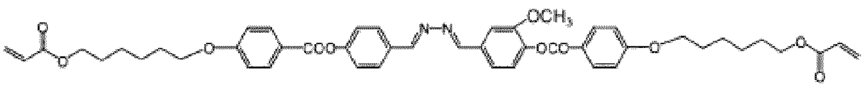
(B2)

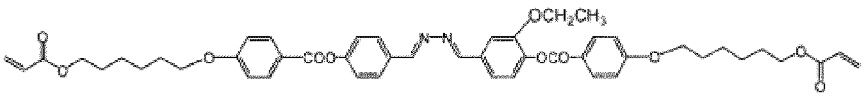
(B3)

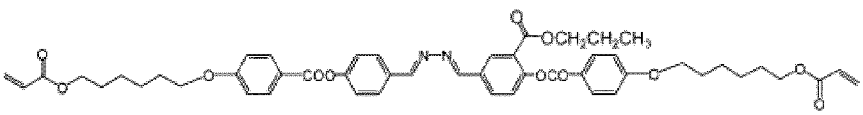
(B4)

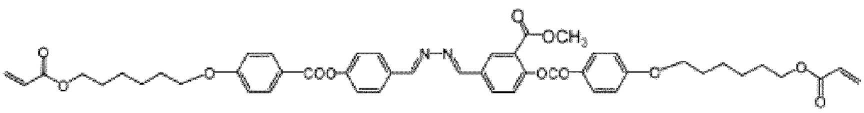
(B5)

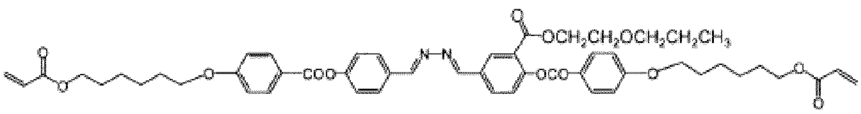
(B6)

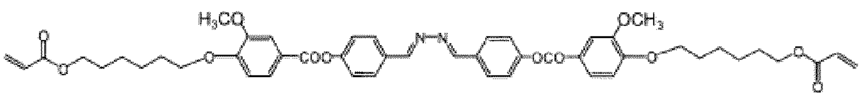
(B7)

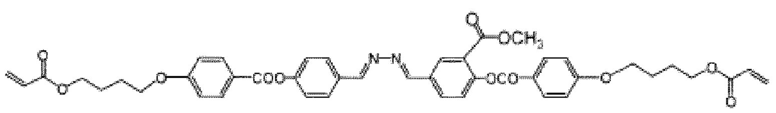
(B8)

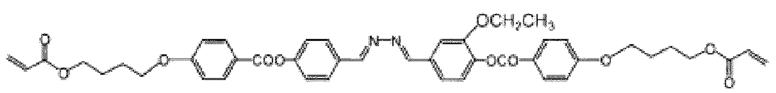
(B9)

Chemical formula 2

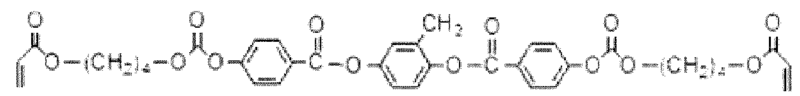
(B10)

When the liquid crystal composition includes the above-described rod-shaped liquid crystal compound, the

liquid crystal composition preferably includes a compound represented by the formula (2) as an orientation aid in combination with the rod-shaped liquid crystal compound.

$$R^1\text{-}A^2\text{-}B\text{-}A^2\text{-}R^2 \qquad (2)$$

In the formula (2), $R^1$ and $R^2$ are each independently selected from the group consisting of a linear or branched alkyl group of 1 to 20 carbon atoms, a linear or branched alkylene oxide group of 1 to 20 carbon atoms, a hydrogen atom, a halogen atom, a hydroxyl group, a carboxyl group, a (meta)acrylic group which may optionally have an intervening bonding group, an epoxy group, a mercapto group, an isocyanate group, an amino group, and a cyano group.

The alkyl group and the alkylene oxide group may be unsubstituted or substituted with one or more halogen atoms. In addition, the halogen atom, hydroxyl group, carboxyl group, (meta)acrylic group, epoxy group, mercapto group, isocyanate group, amino group, and cyano group may be bonded to a C1 to C2 alkyl group and alkylene oxide group.

Preferable examples of $R^1$ and $R^2$ may include a halogen atom, a hydroxyl group, a carboxyl group, a (meth)acrylic group, an epoxy group, a mercapto group, an isocyanate group, an amino group, and a cyano group.

Furthermore, at least one of $R^1$ and $R^2$ is preferably a reactive group. When the compound of the formula (2) has a reactive group as at least one of $R^1$ and $R^2$, the compound represented by the formula (2) is fixed in the liquid crystal composition cured layer at the time of curing, so that a stronger layer can be formed. Herein, examples of the reactive group may include a carboxyl group, a (meth)acrylic group, an epoxy group, a mercapto group, an isocyanate group, and an amino group.

In the formula (2), $A^1$ and $A^2$ each independently represent a group selected from the group consisting of a 1,4-phenylene group, a 1,4-cyclohexylene group, a cyclohexene-1,4-ylene group, a 4,4'-biphenylene group, a 4,4'-bicyclohexylene group, and a 2,6-naphthylene group. The 1,4-phenylene group, 1,4-cyclohexylene group, cyclohexene-1,4-ylene group, 4,4'-biphenylene group, 4,4'-bicyclohexylene group, and 2,6-naphthylene group are not substituted or may be substituted with one or more substituents such as a halogen atom, a hydroxyl group, a carboxyl group, a cyano group, an amino group, and a C1 to C10 alkyl group and halogenated alkyl group. When two or more substituents are present in each of $A^1$ and $A^2$, they may be the same as, or different from, each other.

Particularly preferable examples as $A^1$ and $A^2$ may include groups selected from the group consisting of a 1,4-phenylene group, a 4,4'-biphenylene group, and a 2,6-naphthylene group. These aromatic ring skeletons are relatively rigid compared to alicyclic skeletons, and the affinity of the groups to mesogens of the rod-shaped liquid crystal compound is high and orientation uniformity becomes higher.

In the formula (2), B is selected from the group consisting of a single bond, -O-, -S-, -S-S-, -CO-, -CS-, - OCO-, $-CH_2-$, $-OCH_2-$, -CH=N-N=CH-, -NHCO-, -O-(C=O)-O-, $-CH_2-(C=O)-O-$, and $-CH_2O-(C=O)-$.

Particularly preferable examples as B may include a single bond, -O-(C=O)-, and -CH=N-N=CH-.

Particularly preferable specific examples of the compound represented by the formula (2) may include the following compounds (A1) to (A10). As the compounds of the formula (2), one type thereof may be solely used, and two or more types thereof may also be used in combination at any ratio.

Chemical formula 3

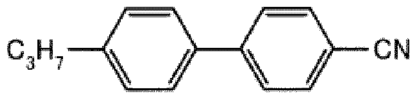 (A1)

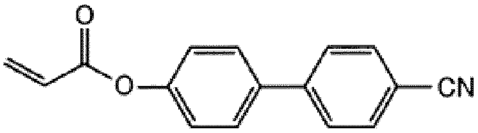 (A2)

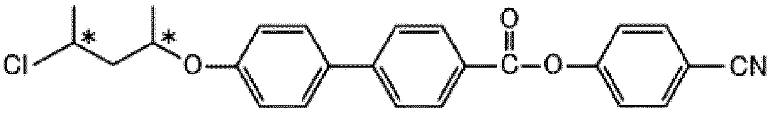 (A3)

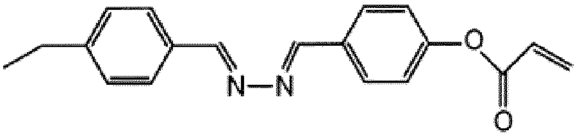 (A4)

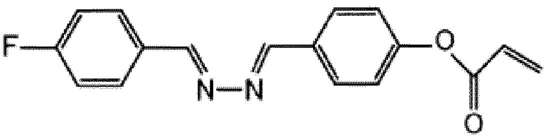 (A5)

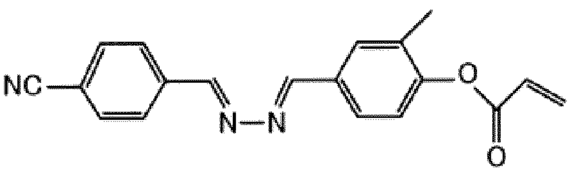 (A6)

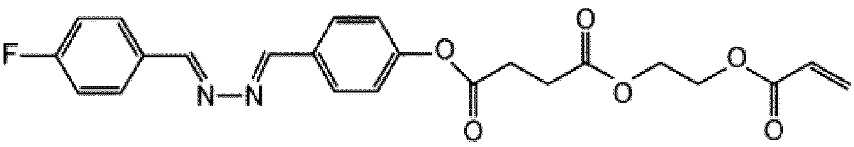 (A7)

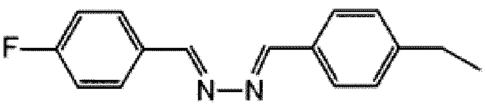 (A8)

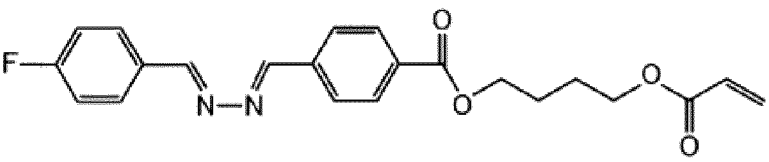 (A9)

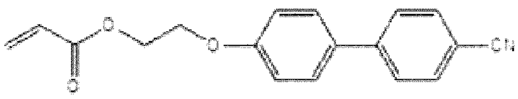 (A10)

In the above compound (A3), "*" represents a chiral center.

The weight ratio represented by (total weight of the compound represented by the formula (2))/(total weight of the rod-shaped liquid crystal compound) is preferably 0.001 or more, more preferably 0.01 or more, and still more preferably 0.05 or more, and is preferably 1 or less, and more preferably 0.65 or less. By setting the weight ratio to the lower limit value or more, orientation uniformity can be enhanced in the layer made of the liquid crystal composition. By setting the weight ratio to the upper limit value or less, orientation uniformity can be enhanced. Furthermore, stability of

the liquid crystal phase of the liquid crystal composition can be enhanced. Furthermore, the refractive index anisotropy Δn of the liquid crystal composition can be enhanced, and thereby the liquid crystal composition cured layer having desired optical performances such as the selective reflection performance of circularly polarized light can be stably obtained. Herein, the total weight of the compound represented by the formula (2) indicates, in a case where only one type of the compound represented by the formula (2) is used, the weight of the compound, and indicates, in a case where two or more types thereof are used, the total weight of them. Similarly, the total weight of the rod-shaped liquid crystal compound indicates, in a case where only one type of the rod-shaped liquid crystal compound is used, the weight of the compound, and indicates, in a case where two or more types thereof are used, the total weight of them.

In a case where the compound represented by the formula (2) and the rod-shaped liquid crystal compound are used in combination, the molecular weight of the compound represented by the formula (2) is preferably less than 600, and the molecular weight of the rod-shaped liquid crystal compound is preferably 600 or more. With this configuration, the compound represented by the formula (2) can enter into the gap of the rod-shaped liquid crystal compound having a molecular weight larger than that of the compound represented by the formula (2), and orientation uniformity can thus be improved.

The liquid crystal composition for forming the cholesteric resin layer may further include an optional component constituting the cholesteric resin layer and a solvent for facilitating handling of the liquid crystal composition. Examples of the optional components may include a chiral agent, a polymerization initiator, and a surfactant. Specific examples of the optional component and the solvent may include those described in Japanese Patent Application Laid-Open No. 2019-188740 A.

A film that can be used as a reflective circular polarizer layer may be obtained by applying the liquid crystal composition onto a surface of a support having an orientation regulating force to form a layer made of the liquid crystal composition, then giving thereto orientation to cause a cholesteric liquid crystal phase, and curing. As the support having an orientation regulating force, a film having a rubbed surface, a film having an orientation regulating force imparted to the surface by stretching, or the like may be used. The liquid crystal composition may be oriented in the cholesteric liquid crystal phase immediately after application, but orientation may be achieved by performing a treatment such as warming, as necessary, to be in a condition in which a cholesteric liquid crystal phase is exhibited. As a curing method for curing the liquid crystal composition, a method suitable for the component(s) contained in the cholesteric liquid crystal composition may be selected. The layer made of the cholesteric liquid crystal composition is usually cured by polymerizing a polymerization component such as a polymerizable liquid crystal compound contained in the cholesteric liquid crystal composition. Examples of the polymerization method may include a method of irradiating the composition with an active energy ray and a thermal polymerization method. Among these, the method of irradiating with an active energy ray is preferable because thereby the polymerization reaction can be effected at room temperature,. Herein, the active energy rays for irradiation may include light such as visible light, ultraviolet light, and infrared light, and any energy rays such as electron beams. Herein, the active energy rays for irradiation may include light such as visible light, ultraviolet light, and infrared light, and any energy rays such as electron beams. When the layer made of the cholesteric liquid crystal composition is cured by irradiation with active energy rays, the preferable strength of the irradiated active energy rays varies depending on the liquid crystal composition to be used, and may be, for example, 50 $mJ/cm^2$ to 10,000 $mJ/cm^2$.

Furthermore, after the liquid crystal compound is oriented, the layer made of the cholesteric liquid crystal composition may be subjected to a band-broadening treatment before it is cured. Such a band-broadening treatment may be performed, for example, by a combination of an irradiation treatment with active energy rays and a warming treatment one or more times. In this case, the energy of light to be irradiated with may vary depending on the liquid crystal composition, and may be 0.01 $mJ/cm^2$ to 50 $mJ/cm^2$, for example. Furthermore, the heating treatment may be performed, for example, by heating the composition to a temperature of preferably 40°C or higher, more preferably 50°C or higher, and preferably 200°C or lower, more preferably 140°C or lower. By performing such a band-broadening treatment, it is possible to obtain a broad reflection wavelength band by continuously greatly changing the pitch of the helical structure.

Examples of the reflective linear polarizer may include a film obtained by laminating multiple layers of thin films (e.g., product name "DBEF" manufactured by 3M), and a wire-grid polarizer.

Regardless of whether the reflective polarizer layer is a reflective circular polarizer or a reflective linear polarizer, unpolarized light incident on the reflective polarizer layer is reflected by the reflective polarizer layer with reflectivity of up to 50%. Depending on the reflection band and the reflectivity, the reflective polarizer layer visually exhibits various colors. When the reflectivity of the unpolarized light that is incident on the reflective polarizer layer and reflected by the reflective polarizer layer is 35% to 50% for all the wavelengths in a wavelength region of 420 nm to 650 nm, the reflective polarizer layer is observed as a silver-color layer. When the reflection band where the reflectivity is 35 to 50% is narrower, the reflective polarizer layer may exhibit various colors depending on the reflection band. For example, when the central wavelengths of the reflection band are around 450 nm, around 550 nm, and around 650 nm, the reflective polarizer layer may exhibit colors of blue, green, and red, respectively. The central wavelength of the reflection band may be adjusted with the type of materials constituting the film, the ratio of its components, and conditions for producing the film. In

particular, in the production of the film having cholesteric regularity, the pitch of the helix of the cholesteric regularity may be adjusted by selecting the type of liquid crystal compounds and a chiral agent, and the containing proportion of the chiral agent. In particular, by changing the content proportion of the chiral agent, a slight pitch adjustment can be easily achieved. With such adjustment, the central wavelength of the reflection band can easily be adjusted to a desired value.

The optical display medium of the present invention may include only one layer as the reflective polarizer layer, or may include a large number of layers. The optical display medium may include only one type of layer as the reflective polarizer layer, or may include a plurality of types of layers different in the polarization state of reflected light. For example, the optical display medium may include a plurality of types of reflective polarizer pieces exhibiting a plurality of types of colors, such as red, green, blue, and silver, and a large number of the reflective polarizer pieces may be disposed so as to spread in a horizontal direction as the reflective polarizer layer. When the optical display medium includes a large number of pieces as the reflective polarizer layer, it is preferable that the reflective polarizer layer is a reflective circular polarizer because there is no need to align its orientation.

From the viewpoint of clarifying the visibility of the latent image, it is preferable that the reflective polarizer layer is constituted of sliver pieces or a combination of silver pieces and pieces of another color.

Specific examples of birefringent layer:

The material constituting the birefringent layer and the method of forming the birefringent layer will be specifically described. The birefringent layer may be the one expressing a function by only a single layer, or may be the one expressing a function by a combination of a plurality of layers.

The birefringent layer is a layer containing a flake-shaped birefringent material, and is preferably an ink layer containing a flake-shaped birefringent material. The ink for forming the birefringent layer may include a flake-shaped birefringent material as a solid content. The birefringent layer that is a flake-shaped ink layer can particularly advantageously enjoy the advantage of a high degree of freedom in production. For example, since the birefringent layer can be easily formed on the surface of a substrate without orientation regulating force, the birefringent layer can be easily formed on the existing reflective polarizer layer by a process such as printing. In addition, the planar shape of the birefringent layer on the display surface of the optical display medium can be easily adjusted, and thereby the degree of design freedom of the shape of the latent image can be enhanced. In addition, the thickness of the birefringent layer can be easily adjusted, and thereby it is possible to easily adjust the optical properties of the C-plate that depend on the thickness.

Examples of the film that can be used as the birefringent layer (including raw films of the flake-shaped birefringent material) may include layers of materials having cholesteric regularity. Examples of the material, the liquid crystal composition that can be used in the production of the film, the components thereof, and the method for producing the film may include those that are the same as those for the film that can be used as the reflective circular polarizer layer. However, when the birefringent layer is constituted by a material having cholesteric regularity, a part or all of the reflection band needs to be outside the visible region. Specifically, the center wavelength of the reflection band may have a center wavelength of the reflection band in an ultraviolet region of 380 nm or shorter or in an infrared region of 780 nm or longer. The reflectance thereof may be 20% or less at any wavelength in a visible range of 400 nm to 680 nm. When a film has such optical properties, the film may seemingly exhibit a transparent appearance similar to that of a general transparent resin film in unpolarized light observation while the film can have optical anisotropy that can function as a C-plate due to the orientation of the liquid crystal compound. Adjustment for such a film may be performed by selecting the type of the materials that constitutes the film and the proportions of the components thereof, and the production conditions of the film. In particular, the pitch of the helix of the cholesteric regularity may be adjusted by selecting the types of the liquid crystal compound and the chiral agent and the content proportion of the chiral agent. In particular, by changing the content proportion of the chiral agent, a slight pitch adjustment can be easily achieved. Furthermore, by performing the production without performing the band-broadening treatment described above, it is possible to easily produce a film having a low degree to which the reflection band extends to the visible region. By such adjustment, desired optical properties can be easily achieved.

Specific examples of isotropic layer:

The material that constitutes the isotropic layer and the method of forming the isotropic layer will be specifically described.

Any optically isotropic material may be used as the material that constitutes the isotropic layer. Particularly preferable examples of the material that constitutes the isotropic layer may include a material having a small color difference from the birefringent layer. Examples of such a material may include a film obtained by curing a liquid crystal composition, containing the same liquid crystal compound as the polymerizable liquid crystal compound used for forming

the birefringent layer, in a state of being oriented in an isotropic phase. More specifically, by using the same liquid crystal composition as the liquid crystal composition used for forming the birefringent layer except that the amount of the chiral agent is reduced or the chiral agent is not used, and curing the liquid crystal composition in a state of being oriented in an isotropic phase, a transparent film having a very small color difference from the birefringent layer can be obtained. By forming a flake from this film and forming the ink layer by the same procedures as those in the formation of the birefringent layer, an isotropic layer having a very small color difference from the birefringent layer can be easily obtained.

Examples of the method for forming a birefringent layer and an isotropic layer by printing:

The formation of the birefringent layer and the isotropic layer, which are ink layers, using an ink may be performed by applying the ink onto the surface of a reflective polarizer layer and curing the ink. Specifically, the ink layer may be formed by a known printing method. From the viewpoint of efficient production, printing methods such as a screen printing method and an inkjet printing method are preferable. In particular, from the viewpoint of achieving placement in which the side surface of the edge of the birefringent layer is in contact with the side surface of the edge of the isotropic layer, or placement in which the separation distance between the birefringent layer and the isotropic layer is a short distance of 200 μm or less, it is preferable to form these layers by a method called a trapping printing method. Specifically, one of the birefringent layer and the isotropic layer is formed as a first layer so as to exhibit a desired surface shape by application and curing of an ink by a printing method, and then the other of the birefringent layer and the isotropic layer is formed as a second layer so as to be in contact with the first layer or separated by a short distance from the first layer by application and curing of an ink by a printing method. By such a trapping printing method, the layers may be formed.

Use application of optical display medium: article

The optical display medium of the present invention may be attached to another component to form an article having an identification function. Alternatively, the optical display medium of the present invention itself may be used as an article having an identification function.

Examples of articles may include various articles such as clothing, shoes, hats, accessories, jewelry, and daily necessities. The article may acquire an identification function by having the optical display medium of the present invention. When the article has such an identification function, it is possible for a person to identify that the article is authentic and not a counterfeit article. In addition, the optical display medium can impart a design effect to an article. The optical display medium may be attached to the article as an ornament, parts, or accessory to the article, such as a tag, charm, patch, sticker, or the like.

The article of the present invention may further include a polarizer viewer in addition to the optical display medium of the present invention. Examples of the polarizer viewer may include those that have a polarizer for observation such as a linear polarizer for observation or a circular polarizer for observation described above, and that are provided to an article so that an optical display medium can be observed through the polarizer for observation. The polarizer viewer may be, for example, in the form of a tag and may be attached to the article body via a string or the like. Thus, by further including a polarizer viewer in addition to the optical display medium, a general article user can easily identify the optical display medium.

Examples

Hereinafter, the present invention will be specifically described by illustrating Examples. However, the present invention is not limited to the Examples described below. The present invention may be freely modified for implementation without departing from the scope of claims of the present invention and the scope of their equivalents.

In the following description, "%" and "part" representing quantity are on the basis of weight, unless otherwise specified. The operation described below was performed under the conditions of normal temperature and normal pressure in the atmosphere, unless otherwise specified.

In the following description, unless otherwise specified, a transparent adhesive tape "LUCIACS CS9621T" (thickness: 25 μm, visible-light transmittance: 90% or more, in-plane retardation: 3 nm or less) manufactured by Nitto Denko Corporation was used as the commercially available adhesive.

Evaluation method:

(1. Particle size distribution and average particle diameter of flakes)

The particle size distribution was measured with a laser diffraction/scattering particle size distribution measuring device (product name "LA-960" manufactured by Horiba, Ltd.), for obtaining a D50 average particle diameter.

(2. In-plane phase difference $Re_0$ and oblique 45° phase difference $Re_{45}$)

Measurement was performed with Axometrics Axoscan Mueller Matrix Polarimeter (OPTO SCIENCE, INC.). The measurement wavelength of 550 nm was used. For the oblique 45° phase difference $Re_{45}$, the entire circumference of a film was measured for every azimuth angle interval of 5° in the range of the polar angle (an angle between the observation direction and the normal direction of the surface of a measurement object) of 45° and the azimuth angle (an angle between a certain in-plane direction of the measurement object and a direction in which the observation direction is tilted) of 0° or more and less than 360°, and an arithmetic average of measured values was obtained.

(3. Color difference ΔE*)

Reflection spectra of the optical display medium were measured by setting the region $R_A$ (the region occupied by the birefringent layer on the upper surface of the display medium) and the region $R_B$ (the region occupied by the isotropic layer on the upper surface of the display medium) as the measurement objects. A display measuring system equipped with a parallel illumination unit (made by Konica Minolta, Inc., product name "DMS803") was used as the measuring device.

The angles of measurement (polar angle and azimuth angle) were appropriately set to the angles at which acquisition of measurement data is desired. For obtaining a color difference ΔE*(P) by observation with polarized light, measurement was performed with a linear polarizer disposed between a detection unit of the measuring device and the measurement objects. The linear polarizer was disposed so that the surface of the linear polarizer is orthogonal to the observation direction, and the azimuth angle of an absorption axis in the plane was rotated 360° in each observation, and the value of ΔE* at the azimuth angle where ΔE* was maximum was adopted as the measurement value in the observation.

For obtaining a color difference ΔE*(N) by observation with unpolarized light, measurement was performed without the presence of a linear polarizer between a photometer and the measurement objects.

Based on the measured reflection spectra, color calculations were performed to calculate L*, a*, and b* for each of the regions $R_A$ and $R_B$. The color difference ΔE* between the regions $R_A$ and $R_B$ was calculated from the difference ΔL*, Δa* and Δb* between values of L*, a* and b* of the respective regions $R_A$ and $R_B$ according to the expression $\Delta E^* = [(\Delta L^*)^2 + (\Delta a^*)^2 + (\Delta b^*)^2]^{1/2}$ (calculation range: 380 to 780 nm).

In respective Examples and Comparative Examples, measurement was performed under following conditions.

(3.1) Observation with unpolarized light (ΔE*(N)): polar angle direction of 0°

(3.2) Observation with polarized light (ΔE*(P)): polar angle direction of 0°

(3.3) Observation with polarized light (ΔE*(P)): all directions in the polar angle direction of 20° to 70° and the azimuth angle direction of 0° to 360°. The maximum value of the measurements and the polar angle that gave the maximum value were recorded.

(4. Visual evaluation)

The following various visual evaluations were performed on the obtained optical display medium.

(4.1) Visual evaluation with unpolarized Light. Direct visual observation was performed on the display surface of the optical display medium from various angles, without the use of polarizers or the like, under natural light irradiation, and whether or not a boundary part between the region $R_A$ and the region $R_B$ was visually recognized, and whether or not color difference was visually recognized were each determined.

(4.2) Visual evaluation with polarized light using linear polarizer. The display surface of the optical display medium was observed through a linear polarizer under natural light in the polar angle direction of 0°, and whether or not the difference in contrast was visually recognized was determined. Further, the polar angle was changed, and the optical display medium was observed at various polar angles that were more than 0° and at various azimuth angles, and whether or not the difference in contrast was visually recognized was determined. When the difference in contrast was not visually recognized in any angles, the display surface was evaluated as "not visible", and when the difference in contrast was visually recognized, the polar angle at which the greatest difference was visually recognized was recorded.

(4.3) Visual evaluation with polarized light using polarized sunglasses. The same evaluation as in (4.2) described above was performed except that an observer wore polarized sunglasses equipped with linear polarizing lenses instead of using the linear polarizer.

(4.4) Visual evaluation with polarized light using polarized light source. The same evaluation as in (4.2) described above was performed except that the linear polarizer was not used and linearly polarized light was used instead of

natural light. As the linearly polarized light, emitted light from a liquid crystal display device installed on a commercially available smartphone (made by Samsung, product name "Galaxy A41") or a commercially available personal computer (made by Panasonic, product name "Let's note CF-SZ6") was used. In all Examples, the determination results were the same regardless of which polarized light was used.

Production Example 1: Coating liquid 1A to 1E:

The components shown in Table 1 were mixed at the proportions shown in Table 1 to obtain coating liquids A to E.

Table 1

| | Coating liquid 1A | Coating liquid 1B | Coating liquid 1C | Coating liquid 1D | Coating liquid 1E |
|---|---|---|---|---|---|
| Liquid crystal compound (X1) | 23.82 | 26.71 | 23.82 | 26.71 | - |
| Liquid crystal compound LC242 | - | - | - | - | 26.71 |
| Chiral agent | 2.99 | 0.84 | - | - | - |
| Orientation aid (X2) | 5.96 | 6.68 | 5.96 | 6.68 | 6.68 |
| Photopolymerization initiator (OXE02) | 0.86 | 0.96 | 0.86 | 0.96 | 0.96 |
| Surfactant | 0.29 | 0.32 | 0.29 | 0.32 | 0.32 |
| MEK | 66.1 | 69.2 | 60.3 | 67.6 | 67.6 |

The unit for the numerical values in Table 1 is part(s) by weight. The materials used in Production Example 1 et seq. are as follows:

Liquid crystal compound (X1): a photopolymerizable liquid crystal compound represented by the above-described formula (B5);

Liquid crystal compound LC242: manufactured by BASF, product name "Paliocolor LC242";

Chiral agent: manufactured by BASF, product name "Paliocolor LC756";

Orientation aid (X2): A photopolymerizable non-liquid crystal compound represented by the above-described formula (A10);

Photopolymerization initiator (OXE02): manufactured by Ciba Japan K.K., product name "Irgacure OXE02";

Photopolymerization initiator (907): manufactured by Ciba Japan K.K., product name "Irgacure 907;

Surfactant: manufactured by AGC Seimi Chemical Co., Ltd., product name "S-420";

MEK: methyl ethyl ketone; and

CPN: cyclopentanone.

Production Example 2: Coating liquids 2SG, 2R and 2B

The components shown in Table 2 were mixed at the proportions shown in Table 2 to obtain coating liquids 2SG, 2G, and 2B.

Table 2

| | Coating liquid 2SG | Coating liquid 2R | Coating liquid 2B |
|---|---|---|---|
| Liquid crystal compound (X1) | 100 | 100 | 100 |

(continued)

| | Coating liquid 2SG | Coating liquid 2R | Coating liquid 2B |
|---|---|---|---|
| Chiral agent | 8 | 7 | 10 |
| Orientation aid (X2) | 25 | 25 | 25 |
| Photopolymerization initiator (907) | 5 | 5 | 5 |
| Surfactant | 0.15 | 0.15 | 0.15 |
| CPN | 320 | 320 | 320 |

Example 1:

1-1. Birefringent layer film:

A support film (long-length polyethylene terephthalate film, "PET film A4100" manufactured by Toyobo Co., Ltd., thickness: 100 μm, hereinafter the same material was used) was prepared, and the surface thereof was subjected to a rubbing treatment. The coating liquid 1B obtained in Production Example 1 was applied onto the rubbed surface with a bar coater to form an uncured coating liquid film.

The film of the coating liquid was subjected to a heating treatment in an oven at 140°C for 2 minutes to give orientation to the liquid crystal compound in the coating liquid, and the film was then dried. After that, the film was cooled at room temperature for 1 minute, and then the film was irradiated with ultraviolet rays for curing. The irradiation was performed in a nitrogen-atmosphere (the oxygen-concentration of 400 ppm or less), and a high-pressure mercury lamp was used as a radiation source. The illuminance at 365 nm (i-line) was set to 280 $mW/cm^2$, and the exposure amount at 365 nm (i-line) was set to 400 $mJ/cm^2$. Thus, a birefringent layer film 1B was formed on the support film. The thickness of the birefringent layer film was 3.1 μm.

1-2. Birefringent layer flake:

The birefringent layer film 1B formed on the support film was pressed with a roller having an uneven shape to form cracks. Then, air was blown to peel the birefringent layer film off from the support film to obtain peeled pieces. The peeled pieces were pulverized by a cutter mill ("Micro Powder MPW-G008" manufactured by West, hereinafter the same machine was used) and classified using a 51-μm sieve. Only the particles that had passed through the sieve were collected to obtain a birefringent layer flake 1B. The particle size distribution of the birefringent layer flake 1B was measured to obtain the average particle diameter thereof. The average particle diameter thereof was found to be 30 μm.

1-3. Birefringent layer ink:

100 parts of a screen ink ("No. 2500 medium" manufactured by Jujo Chemical Co., Ltd.), 10 parts of a dedicated diluent for the screen ink (Tetron standard solvent), and 15 parts of the birefringent layer flake 1B were mixed to obtain a birefringent layer ink 1B.

1-4. Isotropic layer film:

The coating liquid 1D obtained in Production Example 1 was applied onto one surface of another support film with a bar coater to form an uncured coating liquid film. The film of the coating liquid was subjected to a heating treatment in an oven at 210°C for 5 minutes to dry the film. After that, the film was irradiated with ultraviolet rays for curing. The irradiation was performed in a nitrogen-atmosphere (the oxygen concentration of 400 ppm or less) keeping the temperature at 210°C which was the same as the heating temperature, and a high-pressure mercury lamp was used as a radiation source. The illuminance at 365 nm (i-line) was set to 280 $mW/cm^2$, and the exposure amount at 365 nm (i-line) was set to 400 $mJ/cm^2$. Thus, an isotropic layer film 1D was formed on the support film. The thickness of the isotropic layer film was 3.1 μm .

1-5. Isotropic layer flake and ink:

An isotropic layer flake 1D and an isotropic layer ink 1D were obtained by the same procedure as in (1-2) to (1-3) except that the isotropic layer film 1D on the support film was used instead of the birefringent layer film 1B on the

support film. The average particle diameter of the isotropic layer flake 1D was 30 μm.

1-6. Reflective polarizer layer film 2S and flake 2S:

A support film was prepared, and the surface thereof was subjected to a rubbing treatment. The coating liquid 2SG obtained in Production Example 2 was applied onto the rubbed surface with a bar coater to form an uncured coating liquid film.

The film of the coating liquid was subjected to a heating treatment in an oven at 120°C for 4 minutes to give orientation to the liquid crystal compound in the coating liquid, and the film was then dried. After that, the film was subjected to a band-broadening treatment. In this band-broadening treatment, the irradiation with weak ultraviolet rays with 5 $mJ/cm^2$ to 30 $mJ/cm^2$ and the warming treatment at 100°C to 120°C were alternately repeated for a plurality of times, whereby the wavelength range in which the film exhibits the circularly polarized light separation function was controlled to have a desired wavelength width. After that, the film was irradiated with curing ultraviolet rays at 800 $mJ/cm^2$ to cure the film. Thus, a reflective polarizer layer film 2S was formed on the support film. The thickness of the reflective polarizer layer film was 5.2 μm. The reflective polarizer layer film 2S was silver when visually observed under natural light.

A reflective polarizer layer flake 2S was obtained by the same procedure as in (1-2) except that the reflective polarizer layer film 2S on the support film was used instead of the birefringent layer film 1B on the support film. The average particle diameter of the reflective polarizer layer flake 2S was 30 μm.

1-7. Reflective polarizer layer ink 2S:

A reflective polarizer layer ink 2S was obtained by the same procedure as in (1-3) except that the reflective polarizer layer flake 2S was used instead of the birefringent layer flake 1B.

1-8. Formation of reflective polarizer layer:

A substrate (a black-colored polyethylene terephthalate film) was prepared, and the surface thereof was subjected to a corona treatment. On the corona-treated surface, a film of the reflective polarizer layer ink 2S obtained in (1-7) was formed by screen printing (using a screen plate with 120 lines per inch, hereinafter the same plate was used). The film was dried to form a reflective polarizer layer. Consequently, a multilayer product including the reflective polarizer layer and the substrate was obtained. The obtained reflective polarizer layer was visually observed under natural light and found to have a silver appearance.

1-9. Formation of birefringent layer:

A film of the birefringent layer ink 1B obtained in (1-3) was formed by screen printing on a rectangular area of a part of the surface of the multilayer product obtained in (1-8) on the reflective polarizer layer side. The film was dried to form a birefringent layer.

Separately, a birefringent layer was formed on a support film by the same operation as that of the formation method described above, and the birefringent layer was transferred to glass via a commercially available adhesive to form a birefringent layer for phase difference measurement. The in-plane phase difference $Re_0$ and the oblique 45° phase difference $Re_{45}$ thereof were measured. Measurement results are shown in Table 3. When the birefringent layer obtained was visually observed under natural light, the birefringent layer had an appearance of a transparent layer similar to that of an ordinary transparent film.

1-10. Formation of isotropic layer: Optical display medium:

A film of the isotropic layer ink 1D obtained in (1-5) was formed by screen-printing on a rectangular area adjacent to the birefringent layer on the surface of the multilayer product obtained in (1-9) on the reflective polarizer layer side. The film was dried to form an isotropic layer. The amount of ink applied was adjusted so that the thickness of the isotropic layer was the same as the thickness of the adjacent birefringent layer. This resulted in an optical display medium having the shape schematically illustrated in FIG. 1 including a substrate and a reflective polarizer layer, and a birefringent layer and an isotropic layer that are provided on the surface of the reflective polarizer layer.

Separately, an isotropic layer for phase difference measurement was formed on the glass plate by the same operation as that of the formation method described above, and the in-plane phase difference Reo and the oblique 45° phase difference $Re_{45}$ thereof were measured. Measurement results are shown in Table 3. When the obtained isotropic layer was visually observed under natural light, it had an appearance of a transparent layer similar to that of an ordinary transparent film.

The chromaticity difference ΔE* between the region $R_A$ of the birefringent layer and the region $R_B$ of the isotropic layer was measured on the obtained optical display medium under various measurement conditions. Measurement results are shown in Table 4.

Various visual evaluations were performed on the obtained optical display medium. Evaluation results are shown in Table 5.

Example 2:

An optical display medium and other structures were obtained and evaluated by the same operation as that of Example 1 except for the following changes. Both the birefringent layer and the isotropic layer obtained had an appearance of a transparent layer similar to an ordinary transparent film.

- In the process of forming the birefringent layer film in (1-1), the coating liquid 1A was used instead of the coating liquid 1B.
- In the process of forming the isotropic layer film in (1-4), the coating liquid 1C was used instead of the coating liquid 1D.
- In the process of forming the birefringent layer in (1-9), the coating thickness of the birefringent layer ink was changed. The thickness, the in-plane phase difference $Re_0$, and the oblique 45° phase difference $Re_{45}$ of the obtained birefringent layer were as shown in Table 3.

Examples 3 and 4:

An optical display medium and other structures were obtained and evaluated by the same operation as that of Example 1 except for the following changes.

- In the process of forming the birefringent layer in (1-9), the coating thickness of the birefringent layer ink was changed. The in-plane phase difference $Re_0$ and the oblique 45° phase difference $Re_{45}$ of the obtained birefringent layer were as shown in Table 3. The obtained birefringent layer had an appearance of a transparent layer similar to an ordinary transparent film.

Example 5:

5-1. Reflective polarizer layer film 2B and flake 2B:

A reflective polarizer layer film 2B and a reflective polarizer layer flake 2B were obtained by the same operation as that in (1-6) of Example 1 except for the following changes.

- The coating liquid 2B was used instead of the coating liquid 2SG.
- The band-broadening treatment was not performed. That is, the dried film was subjected to ultraviolet irradiation for curing without undergoing the band-broadening treatment. The obtained reflective polarizer layer film 2B had a blue appearance when visually observed under natural light.

5-2. Reflective polarizer layer ink 2B:

A reflective polarizer layer ink 2B was obtained by the same operation as that in (1-3) of Example 1 except that the reflective polarizer layer flake 2B was used instead of the birefringent layer flake 1B.

5-3. Optical display medium and others:

An optical display medium and other structures were obtained and evaluated by the same operation as that in (1-1) to (1-5) and (1-8) to (1-10) of Example 1 except that, in the process of forming the reflective polarizer layer in (1-8), the reflective polarizer layer ink 2B obtained in (5-2) was used instead of the reflective polarizer layer ink 2S.

Example 6:

6-1. Reflective polarizer layer film 2G and flake 2G:

A reflective polarizer layer film 2G and a reflective polarizer layer flake 2G were obtained by the same operation as that in (1-6) of Example 1 except for the following changes.

- The band-broadening treatment was not performed. That is, the dried film was subjected to ultraviolet irradiation for curing without undergoing the band-broadening treatment. The obtained reflective polarizer layer film 2B had a green appearance when visually observed under natural light.

6-2. Reflective polarizer layer ink 2G:

A reflective polarizer layer ink 2G was obtained by the same operation as that in (1-3) of Example 1 except that the reflective polarizer layer flake 2G was used instead of the birefringent layer flake 1B.

6-3. Optical display medium and others:

An optical display medium and other structures were obtained and evaluated by the same operation as that in (1-1) to (1-5) and (1-8) to (1-10) of Example 1 except that, in the process of forming the reflective polarizer layer in (1-8), the reflective polarizer layer ink 2G obtained in (6-2) was used instead of the reflective polarizer layer ink 2S.

Example 7:

7-1. Reflective polarizer layer film 2R and flake 2R:

A reflective polarizer layer film 2R and a reflective polarizer layer flake 2R were obtained by the same operation as that in (1-6) of Example 1 except for the following changes.

- The coating liquid 2R was used instead of the coating liquid 2SG.
- The band-broadening treatment was not performed. That is, the dried film was subjected to ultraviolet irradiation for curing without undergoing the band-broadening treatment. The obtained reflective polarizer layer film 2R had a red appearance when visually observed under natural light.

7-2. Reflective polarizer layer ink 2R:

A reflective polarizer layer ink 2R was obtained by the same operation as that in (1-3) of Example 1 except that the reflective polarizer layer flake 2R was used instead of the birefringent layer flake 1B.

7-3. Optical display medium and others:

An optical display medium and other structures were obtained and evaluated by the same operation as that in (1-1) to (1-5) and (1-8) to (1-10) of Example 1 except that, in the process of forming the reflective polarizer layer in (1-8), the reflective polarizer layer ink 2R obtained in (7-2) was used instead of the reflective polarizer layer ink 2S.

Example 8

8-1. Reflective polarizer layer ink 2RGB:

A reflective polarizer layer ink 2RGB was obtained by the same operation as that in (1-3) of Example 1 except that 5 parts of the reflective polarizer layer flake 2B obtained in (5-1), 5 parts of the reflective polarizer layer flake 2G obtained in (6-1), and 5 parts of the reflective polarizer layer flake 2R obtained in (7-1) were used in combination instead of 15 parts of the birefringent layer flake 1B.

8-2. Optical display medium and others:

An optical display medium and other structures were obtained and evaluated by the same operation as that in (1-1) to (1-5) and (1-8) to (1-10) of Example 1 except that, in the process of forming the reflective polarizer layer in (1-8), the reflective polarizer layer ink 2RGB obtained in (8-1) was used instead of the reflective polarizer layer ink 2S. When the reflective polarizer layer was obtained, the reflective polarizer layer was visually observed under natural light and found to have a silver appearance.

Example 9:

An optical display medium and other structures were obtained and evaluated by the same operation as that of

Example 1 except for the following changes.

- In the process of forming the isotropic layer film in (1-4), the coating liquid 1E was used instead of the coating liquid 1D. The isotropic layer had an appearance of a transparent layer similar to an ordinary transparent film.

Comparative Example 1:

C1-1. Birefringent layer flake

A commercially available λ/4 waveplate film (manufactured by ZEON Corporation, product name "ZEONOR film", thickness: 13 μm, hereinafter the same film was used) was cut to obtain a cut piece. The cut piece was pulverized with a cutter mill and classified using a 51-μm sieve. Only the particles that had passed through the sieve were collected to obtain a birefringent layer flake 1F.

The particle size distribution of the birefringent layer flake 1F was measured to obtain the average particle diameter thereof. The average particle diameter thereof was found to be 40 μm.

C1-2. Isotropic layer ink:

100 parts of a screen ink ("No. 2500 medium" manufactured by Jujo Chemical Co., Ltd.) and 10 parts of a dedicated diluent for the screen ink (Tetron standard solvent) were mixed to obtain an isotropic layer ink 1G.

C1-3. Optical display medium, and others:

An optical display medium and other structures were obtained and evaluated by the same operation as that in (1-3) and (1-6) to (1-10) of Example 1 except for the following changes.

- In the preparation of the birefringent layer ink in (1-3), the birefringent layer flake 1F obtained in (C1-1) was used instead of the birefringent layer flake 1B.
- In the process of forming the isotropic layer in (1-10), the isotropic layer ink 1G obtained in (C1-2) was used instead of the isotropic layer ink 1D.

Comparative Example 2:

C2-1. Birefringent layer flake:

A commercially available λ/2 waveplate film (manufactured by ZEON Corporation, product name "ZEONOR film", thickness: 26 μm, hereinafter the same film was used) was cut to obtain a cut piece. The cut piece was pulverized with a cutter mill and classified using a 51-μm sieve. Only the particles that had passed through the sieve were collected to obtain a birefringent layer flake 1H.

The particle size distribution of the birefringent layer flake 1H was measured to obtain the average particle diameter thereof. The average particle diameter thereof was found to be 40 μm.

C2-2. Optical display medium, and others:

An optical display medium and other structures were obtained and evaluated by the same operation as that in (1-3) and (1-6) to (1-10) of Example 1 except for the following changes.

- In the preparation of the birefringent layer ink in (1-3), the birefringent layer flake 1H obtained in (C2-1) was used instead of the birefringent layer flake 1B.
- In the process of forming the isotropic layer in (1-10), the isotropic layer ink 1G obtained in (C1-2) of Comparative Example 1 was used instead of the isotropic layer ink 1D.

Comparative Example 3:

An optical display medium and other structures were obtained and evaluated by the same operation as that in (1-6) to (1-10) of Example 1 except for the following changes.

- In the process of forming the birefringent layer in (1-9), a commercially available λ/2 waveplate film (product name

"ZEONOR film" manufactured by ZEON Corporation) was bonded to the surface of the reflective polarizer layer, instead of applying and drying the birefringent layer ink by printing, thereby forming a birefringent layer. The bonding was performed by cutting the waveplate film into the same shape as that of the birefringent layer formed in (1-9), disposing an adhesive layer on one surface, and bonding the reflective polarizer layer and the waveplate film via the adhesive layer. In addition, the in-plane phase difference Reo and the oblique 45° phase difference $Re_{45}$ of the $\lambda/2$ waveplate films were measured. The measurement results are shown in Table 3.

- In the process of forming the isotropic layer in (1-10), the isotropic layer ink 1G obtained in (C1-2) of Comparative Example 1 was used instead of the isotropic layer ink 1D.

Comparative Example 4:

C4-1. Positive-A birefringent layer film:

A birefringent layer film 1D-1 was formed on the support film by the same operation as that in (1-1) of Example 1 except that the coating liquid 1D was used instead of the coating liquid 1B and the coating thickness was changed in two ways. The thickness of the film 1D-1 for the birefringent layer was 1.2 μm.

C4-2. Optical display medium, and others:

An optical display medium and other structures were obtained and evaluated by the same operation as that in (1-4) to (1-10) of Example 1 except for the following changes

- In the process of forming the birefringent layer in (1-9), the birefringent layer film 1D-1 obtained in (C4-1) was bonded to the reflective polarizer layer instead of applying and drying the birefringent layer ink by printing, thereby forming a birefringent layer. The bonding was performed by cutting the birefringent layer film into the same shape as that of the birefringent layer formed in (1-9), disposing an adhesive layer on one surface, bonding the reflective polarizer layer and the birefringent layer film via the adhesive layer, and then peeling off the support film. Separately, a birefringent layer for phase difference measurement was formed on the support film by the same operation as that in the formation method described above, and the birefringent layer was transferred to glass via a commercially available adhesive to form a birefringent layer for phase difference measurement. The in-plane phase difference $Re_0$ and the oblique 45° phase difference $Re_{45}$ thereof were measured. The measurement results are shown in Table 3.

Comparative Example 5:

An optical display medium and other structures were obtained and evaluated by the same operation as that in (1-3) to (1-10) of Example 1 except for the following changes.

- In the preparation of the birefringent layer ink in (1-3), the birefringent layer flake 1H obtained in (C2-1) was used instead of the birefringent layer flake 1B.

The results of Examples and Comparative Examples are shown in Tables 3 to 5.

Table 3

| | Birefringent layer Re0 (nm) | Birefringent layer Re45 (nm) | Birefringent layer film thickness (μm) | Isotropiclayer Re0 (nm) | Isotropiclayer Re45 (nm) | Isotropic layer film thickness (pm) |
|---|---|---|---|---|---|---|
| Ex. 1 | 4 | 80 | 3.1 | 3 or less | 3 or less | 3.1 |
| Ex. 2 | 5 | 137 | 5.3 | 3 or less | 3 or less | 5.3 |
| Ex. 3 | 5 | 132 | 5.2 | 3 or less | 3 or less | 5.2 |
| Ex. 4 | 7 | 234 | 8.9 | 3 or less | 3 or less | 8.9 |
| Ex. 5 | 5 | 137 | 5.3 | 3 or less | 3 or less | 5.3 |
| Ex. 6 | 5 | 137 | 5.3 | 3 or less | 3 or less | 5.3 |
| Ex. 7 | 5 | 137 | 5.3 | 3 or less | 3 or less | 5.3 |

(continued)

| | Birefringent layer Re0 (nm) | Birefringent layer Re45 (nm) | Birefringent layer film thickness (μm) | Isotropic layer Re0 (nm) | Isotropic layer Re45 (nm) | Isotropic layer film thickness (pm) |
|---|---|---|---|---|---|---|
| Ex. 8 | 5 | 137 | 5.3 | 3 or less | 3 or less | 5.3 |
| Ex. 9 | 5 | 137 | 5.3 | 3 or less | 3 or less | 5.3 |
| Comp. Ex. 1 | 137 | 130-110 | 13 | 0 | 0 | - |
| Comp. Ex. 2 | 275 | 260-220 | 26 | 0 | 0 | |
| Comp. Ex. 3 | 275 | 260-220 | 26 | 0 | 0 | - |
| Comp. Ex. 4 | 280 | 275-250 | 1.2 | 3 or less | 3 or less | 5.2 |
| Comp. Ex. 5 | 275 | 260-220 | 26 | 3 or less | 3 or less | 5.2 |

Table 4

| | Birefringent layer type | Isotropic layer type | Reflective polarizer layer type | (3.1) ΔE* (N) 0° | (3.2) ΔE* (P) 0° | (3.3) ΔE* (P) 20-70° | (3.3) ΔE* (P) 20-70° maximum polar angle (°) |
|---|---|---|---|---|---|---|---|
| Ex. 1 | 1B ink | 1D ink | 2S ink | 0.1 | 0.1 | 19 | 70 |
| Ex. 2 | 1A ink | 1C ink | 2S ink | 0.2 | 0.2 | 20 | 45 |
| Ex. 3 | 1B ink | 1D ink | 2S ink | 0.3 | 0.3 | 22 | 45 |
| Ex. 4 | 1B ink | 1D ink | 2S ink | 0.2 | 0.2 | 24 | 35 |
| Ex. 5 | 1B ink | 1D ink | 2B ink | 0.3 | 0.3 | 15 | 45 |
| Ex. 6 | 1B ink | 1D ink | 2G ink | 0.2 | 0.3 | 20 | 45 |
| Ex. 7 | 1B ink | 1D ink | 2R ink | 0.3 | 0.3 | 18 | 45 |
| Ex. 8 | 1B ink | 1D ink | 2RGB ink | 0.3 | 0.3 | 21 | 45 |
| Ex. 9 | 1B ink | 1E ink | 2S ink | 6.7 | 7.1 | 22 | 45 |
| Comp. Ex. 1 | 1F ink | Transparent medium | 2S ink | 0.2 | 0.2 | 0.2 | - |
| Comp. Ex. 2 | 1H ink | Transparent medium | 2S ink | 0.2 | 0.2 | 0.2 | - |
| Comp. Ex. 3 | λ/2 commercial film | Transparent medium | 2S ink | 0.2 | 0.2 | 0.5 | 0 |
| Comp. Ex. 4 | λ/2 liquid crystal film | 1D ink | 2S ink | 0.2 | 0.2 | 0.3 | - |
| Comp. Ex. 5 | 1H ink | 1D ink | 2S ink | 0.2 | 0.2 | 0.2 | - |

Table 5

| | (4.1) Unpolarized light vision boundary | (4.1) Unpolarized light vision color difference | (4.2)Linear polarizer polar angle 0° contrast | (4.2) Linear polarizer polar angle >0° contrast | (4.3)Sunglasses polar angle 0° contrast | (4.3) Sunglasses polar angle >0° contrast | (4.4)Polarized light source polar angle 0° contrast | (4.4) Polarized light source polar angle >0° contrast |
|---|---|---|---|---|---|---|---|---|
| Ex. 1 | Not visible | Not visible | Not visible | Maximum at 70° | Not visible | Maximum at 70° | Not visible | Maximum at 70° |
| Ex. 2 | Not visible | Not visible | Not visible | Maximum at 45° | Not visible | Maximum at 45° | Not visible | Maximum at 45° |
| Ex. 3 | Not visible | Not visible | Not visible | Maximum at 45° | Not visible | Maximum at 45° | Not visible | Maximum at 45° |
| Ex. 4 | Not visible | Not visible | Not visible | Maximum at 35° | Not visible | Maximum at 35° | Not visible | Maximum at 35° |
| Ex. 5 | Not visible | Not visible | Not visible | Maximum at 45° | Not visible | Maximum at 45° | Not visible | Maximum at 45° |
| Ex. 6 | Not visible | Not visible | Not visible | Maximum at 45° | Not visible | Maximum at 45° | Not visible | Maximum at 45° |
| Ex. 7 | Not visible | Not visible | Not visible | Maximum at 45° | Not visible | Maximum at 45° | Not visible | Maximum at 45° |
| Ex. 8 | Not visible | Not visible | Not visible | Maximum at 45° | Not visible | Maximum at 45° | Not visible | Maximum at 45° |
| Ex. 9 | Visible | Visible | Visible | Maximum at 45° | Visible | Maximum at 45° | Visible | Maximum at 45° |
| Comp. Ex. 1 | Visible *1 | Not visible | Not visible | Not visible | Not visible | Not visible | Not visible | Not visible |
| Comp. Ex. 2 | Visible *1 | Not visible | Not visible | Not visible | Not visible | Not visible | Not visible | Not visible |
| Comp. Ex. 3 | Visible | Not visible | Not visible | Not visible | Not visible | Not visible | Not visible | Not visible |
| Comp. Ex. 4 | Visible | Not visible | Not visible | Not visible | Not visible | Not visible | Not visible | Not visible |
| Comp. Ex. 5 | Not visible | Not visible | Not visible | Not visible | Not visible | Not visible | Not visible | Not visible |
| *1: The boundaries are visible because the birefringent layer flakes are visible. | | | | | | | | |

Based on the results described in the foregoing, the optical display media in the Examples including the specific reflective polarizer layers and the specific birefringent layers specified in the present application exhibit unique properties that a latent image is not visually recognized at the polar angle of 0° while the contrast of the latent image is maximized at a certain polar angle that is more than 0° in observations with various types of polarized light. This indicates that the optical display media are highly effective as identification media.

In Example 9 among Examples 1 to 9, the liquid crystal compound constituting the isotropic layer was different from the liquid crystal compound constituting the birefringent layer. In Example 9, the color difference between the region $R_A$ of the birefringent layer and the region $R_B$ of the isotropic layer was slightly large, and a latent image was slightly recognized even in the observation with unpolarized light. However, in Examples 1 to 8 where the liquid crystal compound constituting the isotropic layer was the same as the liquid crystal compound constituting the birefringent layer, the color difference between the region $R_A$ of the birefringent layer and the region $R_B$ of the isotropic layer was very small, and

the concealability of the area exhibiting identification function was particularly high.

Reference Sign List

100: optical display medium
101: substrate
101U: upper-side surface of substrate
102: reflective polarizer layer
102U: upper-side surface of reflective polarizer layer
111: birefringent layer
112: isotropic layer
119: boundary
RL: reflection region
RA: region
RB: region

## Claims

**1.** An optical display medium having a display surface, the optical display medium comprising:

a reflective polarizer layer provided in a reflection region $R_L$ that is a part of or an entirety of a region of the display surface; and
a birefringent layer that is provided closer to a visual recognition side than the reflective polarizer layer and provided in a region $R_A$ that occupies a part of the reflection region $R_L$, wherein:

the reflective polarizer layer is a layer that reflects incident light as circularly polarized light or linearly polarized light; and
the birefringent layer is a layer containing a flake-shaped birefringent material, and is a layer exhibiting optical properties as a C-plate.

**2.** The optical display medium according to claim 1, wherein the reflective polarizer layer is a layer made of a material having cholesteric regularity.

**3.** The optical display medium according to claim 1 or 2, wherein the reflective polarizer layer is an ink layer containing a flake-shaped reflective material.

**4.** The optical display medium according to claim 1 or 2, wherein a color difference $\Delta E^*(N)$ in observation of the optical display medium with unpolarized light between the region $R_A$ and a region $R_B$ other than the region $R_A$ in the reflection region $R_L$ is 1 or less in observation in a polar angle direction of 0°.

**5.** The optical display medium according to claim 4, wherein the color difference $\Delta E^*(N)$ is 1 or less in all observations in all directions in a polar angle direction of 20° to 70° and in an azimuth angle direction of 0° to 360°.

**6.** The optical display medium according to claim 1 or 2, wherein a color difference $\Delta E^*(P)$ in observation of the optical display medium with polarized light between the region $R_A$ and a region $R_B$ other than the region $R_A$ in the reflection region $R_L$ is 3 or more in any one of observations in all directions in a polar angle direction of 20° to 70° and in an azimuth angle direction of 0° to 360°.

**7.** The optical display medium according to claim 6, wherein the color difference $\Delta E^*(P)$ is 1 or less in observation in a polar angle direction of 0°.

**8.** The optical display medium according to claim 1 or 2, wherein:

an in-plane phase difference $Re(A)_0$ of the birefringent layer measured from a polar angle direction of 0° satisfies $Re(A)_0 \leq 30$ nm; and

an oblique phase difference $Re(A)_{45}$ of the birefringent layer measured at any azimuth angle at a polar angle of 45° satisfies the following expression (e1):

$$70\ nm \leq Re(A)_{45} \leq 700\ nm \quad \text{Expression (e1).}$$

**9.** The optical display medium according to claim 1 or 2, further comprising an isotropic layer that is provided closer to a visual recognition side than the reflective polarizer layer and that occupies a part of or entirety of a region $R_B$ other than the region $R_A$ in the reflection region $R_L$, and wherein

an in-plane phase difference $Re(B)_0$ of the isotropic layer measured from a polar angle direction of 0° satisfies $Re(B)_0 \leq 30$ nm; and
an oblique phase difference $Re(B)_{45}$ of the isotropic layer satisfies $0 \leq Re(B)_{45} \leq 30$.

FIG.1

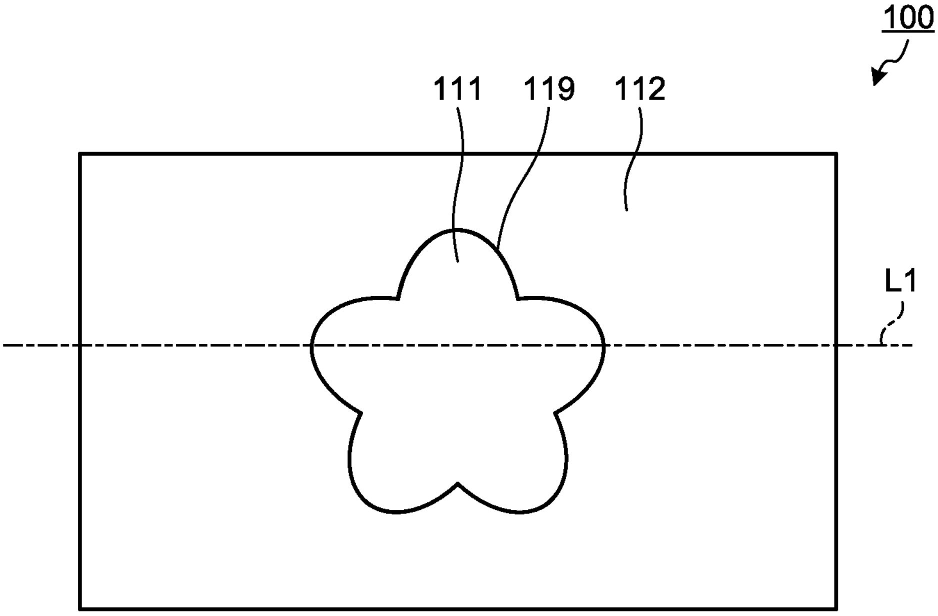
100
111
119
112
L1

FIG.2

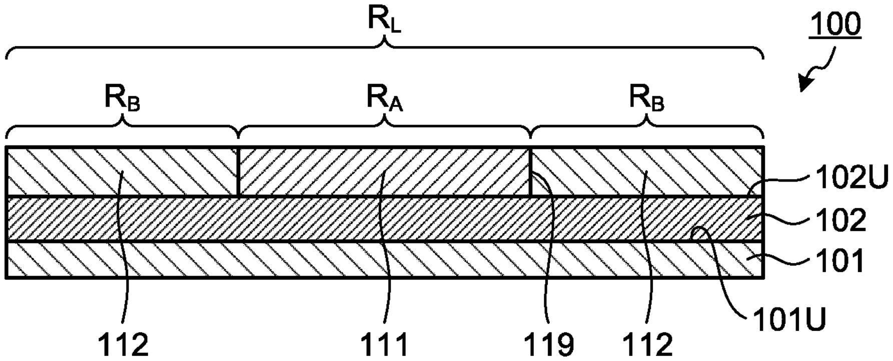
RL
100
RB
RA
RB
102U
102
101
101U
112
111
119
112

## INTERNATIONAL SEARCH REPORT

International application No.
**PCT/JP2022/024956**

### A. CLASSIFICATION OF SUBJECT MATTER

***G02B 5/30***(2006.01)i; ***B32B 7/023***(2019.01)i; ***B42D 25/391***(2014.01)i; ***G02B 5/22***(2006.01)i
FI: G02B5/30; G02B5/22; B32B7/023; B42D25/391

According to International Patent Classification (IPC) or to both national classification and IPC

### B. FIELDS SEARCHED

Minimum documentation searched (classification system followed by classification symbols)

G02B5/30; B32B7/023; B42D25/391; G02B5/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2020/261923 A1 (NIPPON ZEON CO LTD) 30 December 2020 (2020-12-30) paragraphs [0017]-[0095], fig. 1-3 | 1-9 |
| Y | JP 2020-86396 A (NIPPON ZEON CO LTD) 04 June 2020 (2020-06-04) paragraphs [0091]-[0094] | 1-9 |
| A | JP 2014-174472 A (NIPPON ZEON CO LTD) 22 September 2014 (2014-09-22) entire text, all drawings | 1-9 |
| A | WO 2007/105721 A1 (DAI NIPPON PRINTING CO., LTD.) 20 September 2007 (2007-09-20) entire text, all drawings | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/024956**

| Patent document cited in search report | Publication date (day/month/year) | Patent family member(s) | Publication date (day/month/year) |
|---|---|---|---|
| WO 2020/261923 A1 | 30 December 2020 | EP 3992678 A1<br>paragraphs [0020]-[0136], fig. 1-3 | |
| JP 2020-86396 A | 04 June 2020 | US 2021/0032396 A1<br>paragraphs [0245]-[0249]<br>WO 2019/181893 A1<br>CN 111886524 A<br>KR 10-2020-0131833 A | |
| JP 2014-174472 A | 22 September 2014 | (Family: none) | |
| WO 2007/105721 A1 | 20 September 2007 | US 8134660 B2<br>CN 101401013 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010221650 A
- JP 2010113249 A
- US 2010119738
- WO 2005059597 A
- JP 5915838 B
- WO 2020121791 A
- JP 2019188740 A